# EUROPÄISCHE PATENTSCHRIFT

(11) **EP 4 197 197 B1**
(45) Veröffentlichungstag und Bekanntmachung des Hinweises auf die Patenterteilung: **21.05.2025**
(21) Anmeldenummer: 21758112.3
(22) Anmeldetag: 10.08.2021
(51) Int. Cl.: H04R 1/10, G06F 21/10, A63H 5/00

(54) **INTERAKTIVES KOPFHÖRER-SYSTEM ZUM SPEICHERN UND ZUR WIEDERGABE VON AUDIOINHALTEN**
INTERACTIVE HEADPHONE SYSTEM FOR STORING AND RENDERING AUDIO CONTENT
SYSTÈME DE CASQUE AUDIO INTERACTIF POUR LA SAUVEGARDE ET LA RESTITUTION DE CONTENU AUDIO

(30) Priorität: 11.08.2020 DE 102020121117
(43) Veröffentlichungstag der Anmeldung: 21.06.2023
(73) Patentinhaber: KEKZ GmbH, 81667 München (DE)
(72) Erfinder: TAYLOR, Carl Simon, 81667 München (DE); MUMMA, Adin Timothy, 81925 München (DE)
(74) Vertreter: Grünecker Patent- und Rechtsanwälte PartG mbB
(86) Internationale Anmeldenummer: PCT/EP2021/072292
(87) Internationale Veröffentlichungsnummer: WO 2022/034094

(56) Entgegenhaltungen:
- DE-U1- 202015 009 646
- US-A1- 2008 157 991
- ISAKEIT TOBIAS: "Toniebox Teardown", IFIXIT, 26 April 2018 (2018-04-26), pages 1 - 12, XP055862394, Retrieved from the Internet <URL:https://www.ifixit.com/Teardown/Toniebox+Teardown/106148> [retrieved on 20211117]
- DEMPSEY PAUL: "Teardown: Toniebox music player", 19 September 2018 (2018-09-19), pages 1 - 7, XP055862380, Retrieved from the Internet <URL:https://eandt.theiet.org/content/articles/2018/09/teardown-toniebox-music-player/> [retrieved on 20211117]
- EIDTMANN MARIE: "Toniebox: Vorspulen, Anhalten und Co.", 6 January 2020 (2020-01-06), pages 1 - 5, XP055862466, Retrieved from the Internet <URL:https://www.otto.de/updated/ratgeber/toniebox-vorspulen-anhalten-und-co-78261/#anhalten-so-macht-tonie-eine-pause> [retrieved on 20211117]
- ANONYMOUS: "TIMIO player: INTERNAL PHOTOS", FCC ID DATABASE, 15 April 2020 (2020-04-15), pages 1 - 5, XP055862874, Retrieved from the Internet <URL:https://fccid.io/2AUE7-TM0101/Internal-Photos/Internal-Photos-4481983> [retrieved on 20211117]
- ANONYMOUS: "TIMIO - Frequently asked questions", 11 July 2020 (2020-07-11), pages 1 - 5, XP055862878, Retrieved from the Internet <URL:https://timio.co/pages/faq> [retrieved on 20211117]

## Beschreibung

Die Erfindung betrifft ein interaktives Kopfhörer-System zum Speichern und zur Wiedergabe von Audioinhalten, sowie ein Kopfhörer, welches Audiodateien gespeichert hat.

Kopfhörer sind heutzutage in zahlreichen verschiedenen Varianten dem Endnutzer zugänglich, sei es als kabelgebundener Kopfhörer, oder als kabellose Variante, bei der das Funksignal beispielsweise über Bluetooth übertragen wird. Weiterhin kann der Nutzer zwischen Varianten wie Gehörganghörern (oder In-Ear-Kopfhörer), Earbud-Ohrhörern, oder Muschelkopfhörern (zum Beispiel als "On-Ear" oder als "Over-Ear" Variante) wählen. Bei den meisten Kopfhörern ist der wiedergegebene Inhalt nicht auf dem Kopfhörer gespeichert, sondern auf einem Wiedergabemedium, mit dem der Kopfhörer kabelgebunden oder kabellos verbunden ist. Ein solches Wiedergabemedium kann beispielsweise ein Smartphone, ein Computer, ein Tablet, oder ein MP3-Player sein. In dieser gängigen Form kann der Benutzer typischerweise über Bedienelemente und/oder eine Benutzeroberfläche den wiederzugebenden Inhalt auswählen.

Des Weiteren gibt es vereinzelt Kopfhörer, die einen eigenen Speicher enthalten, auf dem wiederzugebende Inhalte gespeichert werden können. Diese Art von Kopfhörer benötigt typischerweise zur Wiedergabe von Audioinhalten nicht zwangsläufig eine Verbindung zu einem Smartphone, Tablet, etc. und kann über im Kopfhörer integrierte Bedienelemente gesteuert werden. Klassischerweise kann der Benutzer den Speicher manuell mit Daten bespielen, beispielsweise über eine kabelgebundene oder kabellose Verbindung mit einem Computer.

Bisherige Kopfhörer werden nur für die direkte Wiedergabe von, gegebenenfalls auf dem Kopfhörer, gespeicherten Audiodateien eingesetzt, ohne dass der Zugriff auf die Audiodateien an sich gesperrt ist. Speziell für Kopfhörer mit auf dem Kopfhörer gespeicherten Daten ist dies auch zunächst nicht intuitiv, da bekannte Kopfhörer keine praktikable Funktionalität zum Entsperren von Audioinhalten mitliefern. Auch für auf einem Smartphone, Tablet, etc. gespeicherte Audioinhalte gibt es klassischerweise lediglich eine Zugangsbeschränkung für das Gerät selbst, zum Beispiel in Form einer PIN-Nummer.

Speziell ein gezieltes, intuitives und nur vorübergehendes Entsperren und daraufhin eine automatische Wiedergabe von einzelnen, auf einem Speicher des Kopfhörers gespeicherten Audioinhalten ist bisher nicht möglich.

Das Dokument DE 202015009646 U1 offenbart ein Abspielgerät für Kinder, die sogenannte "Toniebox", bei der Audioinhalte, welche auf der Box gespeichert sind, durch einen in eine Spielfigur integrierten RFID-Transponder entsperrt werden können. Die Spielfigur wird hierzu auf der Box platziert. Alternativ können Teildateien jeweils auf der Box und der Spielfigur gespeichert sein, wobei die Teildateien von der Box kombiniert werden müssen um eine komplette Wiedergabe zu ermöglichen. Die "Toniebox" besitzt eine Buchse zum Anschluss eines Kopfhörers, ist aber selbst kein Kopfhörer.

Aufgabe der vorliegenden Erfindung ist es somit, auf einem Kopfhörer gespeicherte Audioinhalte intuitiv und selektiv zur Wiedergabe freizugeben.

Die vorliegende Erfindung überwindet die angesprochenen Probleme und löst die Aufgabe durch ein interaktives Kopfhörer-System, insbesondere für Kinder, zum Speichern und zur Wiedergabe von Audioinhalten, sowie einen Kopfhörer, welcher Audiodateien gespeichert hat.

Die zugrundeliegende Technologie betrifft eine Wechselwirkung von einem Near-Field-Communication-Tag, im Folgenden NFC-Tag genannt, und einem Near-Field Communication-Lesegerät, im Folgenden NFC-Lesegerät genannt, wobei das NFC-Lesegerät Bestandteil des Kopfhörers ist und der NFC-Tag, wenn er in die unmittelbare Umgebung des NFC-Lesegeräts gebracht wird, einen speziellen auf dem Kopfhörer gespeicherten Audioinhalt entsperren kann und die Wiedergabe dieses speziellen Audioinhalts automatisch gestartet wird.

Das erfindungsgemäße interaktive Kopfhörer-System und der erfindungsgemäße Kopfhörer, haben den Vorteil, dass selektiv auf einem Kopfhörer gespeicherte Audioinhalte entsperrt und automatisch wiedergegeben werden können, wobei der Nutzer dafür lediglich einen entsprechenden NFC-Tag in die unmittelbare Umgebung des NFC-Lesegeräts des Kopfhörers bringen muss. Dies vereinfacht die Nutzerinteraktion, da beispielsweise zum Starten der Wiedergabe keine Bedienelemente betätigt werden müssen. Weiterhin kann durch einen Lizenzgeber oder eine Aufsichtsperson, beispielsweise einen Supervisor oder einen Elternteil, gesteuert werden, welche Audioinhalte der Benutzer über den Kopfhörer wiedergeben kann, indem nur selektiv NFC-Tags, beziehungsweise in einigen Ausführungsformen Kunststoffchips mit eingebetteten NFC-Tags, dem Benutzer der Kopfhörer zur Verfügung gestellt werden.

Das erfindungsgemäße interaktive Kopfhörer-System zum Speichern und zur Wiedergabe von Audioinhalten umfasst einen NFC-Tag mit einem RFID-Code, der eine eindeutige Kennung des NFC-Tags enthält, und einen Kopfhörer, der einen Speicher, der eine oder mehrere Audiodateien speichert, wobei jede der einen oder mehreren Audiodateien mit einer eindeutigen Kennung assoziiert ist, und wobei die eine oder mehrere Audiodateien gesperrt sind, sodass nur Zugriff durch einen RFID-Code, der eine eindeutigen Kennung enthält, die der eindeutigen Kennung einer jeweiligen Audiodatei entspricht, möglich ist, und ein NFC-Lesegerät umfasst, wobei wenn der NFC-Tag mit einer eindeutigen Kennung, der der eindeutigen Kennung einer jeweiligen Audiodatei entspricht, in die unmittelbare Umgebung des NFC-Lesegeräts gebracht wird, der Kopfhörer konfiguriert ist, zum: Verarbeiten des RFID-Codes, der die eindeutige Kennung des NFC-Tags enthält; Korrelieren der eindeutigen Kennung des NFC-Tags mit der eindeutigen Kennung der auf dem Speicher gespeicherten Audiodatei; Entsperren der Audiodatei; und automatischen Starten der Wiedergabe der Audiodatei.

In einer Ausführungsform ist das System dadurch gekennzeichnet, dass die Wiedergabe automatisch beendet wird, wenn der NFC-Tag aus der unmittelbaren Umgebung des NFC-Lesegeräts entfernt wird. Beendet kann in diesem Kontext sowohl bedeuten, dass die Wiedergabe abgebrochen wird, als auch, dass die Wiedergabe unterbrochen wird.

In einer Ausführungsform ist das System dadurch gekennzeichnet, dass der NFC-Tag in einen Chip, insbesondere aus Kunststoff, eingebettet ist.

In einer weiteren Ausführungsform ist das System dadurch gekennzeichnet, dass der NFC-Tag eine im Wesentlichen radialsymmetrische, insbesondere eine ringförmige, Geometrie hat.

In einer Ausführungsform ist das System dadurch gekennzeichnet, dass der Kopfhörer ferner einen Magnet, insbesondere eine magnetische Fläche, in unmittelbarer Umgebung zu dem NFC-Lesegerät umfasst und der Chip derart eingerichtet ist, dass der Chip zum Entsperren und Wiedergeben von Audioinhalten magnetisch an dem Kopfhörer befestigt werden kann.

In einer weiteren Ausführungsform ist das System dadurch gekennzeichnet, dass eine magnetisierte oder magnetisierbare Komponente in den Chip eingebettet ist, um den Chip magnetisch an dem Kopfhörer zu befestigen.

In einer Ausführungsform ist das System dadurch gekennzeichnet, dass der Chip mindestens eine planare Oberfläche hat und eine magnetische Fläche des Kopfhörers planar ist, sodass der Chip magnetisch an dem Kopfhörer befestigt werden kann, indem eine der mindestens einen planaren Fläche des Chips und die planare magnetische Fläche des Kopfhörers im Wesentlichen in Kontakt gebracht werden.

In einer Ausführungsform ist das System dadurch gekennzeichnet, dass das Gehäuse des Chips eine Radialsymmetrie aufweist und der NFC-Tag zentral in den Chip eingebettet ist und parallel zu einer der mindestens einen planaren Oberfläche des Chips ausgerichtet ist.

In einer Ausführungsform ist das System dadurch gekennzeichnet, dass der Chip im Wesentlichen eine plan-konvexe Geometrie, also eine planare Fläche und eine konvexe Fläche aufweist.

In einer alternativen Ausführungsform ist das System dadurch gekennzeichnet, dass der Chip im Wesentlichen eine zylindrische Geometrie hat.

In einer Ausführungsform ist das System dadurch gekennzeichnet, dass die magnetisierte oder magnetisierbare Komponente ringförmig in den Chip eingebettet ist, wobei die magnetisierte oder magnetisierbare Komponente parallel zu einer der mindestens einen planaren Oberfläche des Chips ausgerichtet ist.

In einer Ausführungsform ist das System dadurch gekennzeichnet, dass die planare magnetische Fläche des Kopfhörers eine Grundfläche einer ersten Kavität bildet, wobei die erste Kavität eine Geometrie aufweist, die geeignet ist, den Chip in lateraler Richtung zu fixieren.

In einer Ausführungsform ist das System dadurch gekennzeichnet, dass die erste Kavität eine kreisförmige Grundfläche hat.

In einer Ausführungsform ist das System dadurch gekennzeichnet, dass eine zweite Kavität auf einem Teil der Grundfläche der ersten Kavität definiert ist, sodass der magnetisch befestigte Chip, durch Ausüben von Druck auf die Chip-Fläche, die mit der zweiten Kavität überlappt, gekippt und dadurch von dem Kopfhörer entfernt werden kann.

In einer Ausführungsform ist das System dadurch gekennzeichnet, dass die Fläche der zweiten Kavität nicht magnetisch ist, sodass der an der magnetischen Grundfläche befestigte Chip bei einem ungewollten Kippen in die zweite Kavität über magnetische Anziehungskraft wieder an die magnetische Grundfläche der ersten Kavität gezogen wird.

In einer Ausführungsform ist das System dadurch gekennzeichnet, dass die erste Kavität eine kreisförmige Grundfläche hat, die zweite Kavität auf einem Kreissegment dieser kreisförmigen Grundfläche definiert ist und eine schräge Ebene mit einem konstanten Winkel in Bezug auf die kreisförmige Grundfläche der ersten Kavität bildet.

In einer Ausführungsform ist das System dadurch gekennzeichnet, dass im Anschluss an das Einbetten von einer oder mehrerer Komponenten die zwei Hälften des Chips durch Ultraschallschweißen zusammengeschweißt werden.

In einer Ausführungsform ist das System dadurch gekennzeichnet, dass eine Dateihistorie der wiedergegebenen Datei, die wiedergegebene Datei (im Speziellen zum Beispiel der Name der Datei und/oder der Pfad, unter dem die Datei gespeichert ist), die eindeutige Kennung des NFC-Tags, und ein Zeitstempel aufgezeichnet werden.

In einer Ausführungsform ist das System dadurch gekennzeichnet, dass die Wiedergabe der Audiodatei nahtlos, insbesondere an der Stelle des Inhalts, bei der die Wiedergabe beendet wurde, fortgeführt wird, wenn der NFC-Tag nach Beendigung der Wiedergabe erneut in die unmittelbare Umgebung des NFC-Lesegeräts gebracht wird.

In einer Ausführungsform ist das System dadurch gekennzeichnet, dass der Kopfhörer ferner einen Infrarotsensor umfasst, der konfiguriert ist zu detektieren ob der Kopfhörer von einer Person getragen wird.

In einer Ausführungsform ist das System dadurch gekennzeichnet, dass die automatische Wiedergabe der Audiodatei nur erfolgt, falls der Infrarotsensor detektiert, dass der Kopfhörer von einer Person getragen wird.

In einer weiteren Ausführungsform ist das System dadurch gekennzeichnet, dass der NFC-Tag ein passiver Tag ist.

In einer Ausführungsform ist das System dadurch gekennzeichnet, dass der Kopfhörer ein Muschelkopfhörer ist. In einer Ausführungsform ist das System dadurch gekennzeichnet, dass der Kopfhörer eine Riffelung auf den Kopfhörermuscheln aufweist. In einer Ausführungsform ist das System dadurch gekennzeichnet, dass das NFC-Lesegerät und die magnetische Fläche an der rechten Kopfhörermuschel angebracht sind.

In einer Ausführungsform sind der Magnet, und die magnetisierte oder magnetisierbare Komponente derart ausgestaltet, dass ein Geräusch am Ohr des Nutzers durch das Befestigen des Chips durch die magnetische Anziehungskraft an dem Kopfhörer unter einem Schwellwert liegt. Der Schwellwert kann einen Schalldruckpegel von zwischen 80 dB und 120 dB umfassen, zum Beispiel 85 dB, 90 dB oder 100 dB.

In einer Ausführungsform ist der Kopfhörer konfiguriert zum: Empfangen einer komplementären Audiodatei von dem NFC-Tag; Ergänzen der auf dem Speicher gespeicherten Audiodatei mit der komplementären Audiodatei von dem NFC-Tag für die Wiedergabe der Audiodatei, wenn der NFC-Tag mit der eindeutigen Kennung in die unmittelbare Umgebung des NFC-Lesegeräts gebracht wird. Die auf dem Speicher gespeicherte Audiodatei (430; 450) kann unvollständig sein und durch die komplementäre Audiodatei vervollständigt werden. Der Kopfhörer kann konfiguriert sein nur vollständige Audiodateien wiederzugeben. Zum Beispiel können alle der ein oder mehreren auf dem Speicher gespeicherten Audiodateien unvollständig sein und jeweils erst durch ein Empfangen einer komplementären Audiodatei vervollständigt werden. Die empfangene komplementäre Audiodatei kann verschlüsselt sein und der Kopfhörer kann konfiguriert sein die empfangene verschlüsselte komplementäre Audiodatei zu entschlüsseln. Die auf dem Speicher gespeicherten Audiodateien können verschlüsselt sein. Der Kopfhörer kann konfiguriert sein die auf dem Speicher des Kopfhörers gespeicherten Audiodateien mittels der empfangenen verschlüsselten komplementären Audiodateien zu entschlüsseln. Dadurch können die Audiodateien vor unberechtigtem Zugriff geschützt werden.

Der erfindungsgemäße Kopfhörer umfasst einen Speicher, auf dem eine oder mehrere Audiodateien gespeichert sind, wobei jede der einen oder mehreren Audiodateien mit einer eindeutigen Kennung assoziiert ist, und wobei die eine oder mehreren Audiodateien gesperrt sind, sodass nur Zugriff durch einen RFID-Code, der eine eindeutigen Kennung enthält, die der eindeutigen Kennung einer jeweiligen Audiodatei entspricht, möglich ist; und ein NFC-Lesegerät, das konfiguriert ist, eine eindeutige Kennung eines NFC-Tags, der in die unmittelbare Umgebung des NFC-Lesegeräts des Kopfhörers gebracht wird, auszulesen, wodurch der Kopfhörer veranlasst wird: die eindeutige Kennung des NFC-Tags mit eindeutigen Kennungen von auf dem Speicher gespeicherten Audiodateien zu vergleichen; eine entsprechende Audiodatei zu entsperren für den Fall, dass die eindeutige Kennung des NFC-Tags mit einer eindeutigen Kennung einer gespeicherten Audiodatei übereinstimmt; und die Wiedergabe der entsprechenden Audiodatei automatisch zu starten.

In einer Ausführungsform ist der Kopfhörer dadurch gekennzeichnet, dass die Wiedergabe automatisch beendet wird, wenn der NFC-Tag aus der unmittelbaren Umgebung des NFC-Lesegeräts entfernt wird. Beendet kann in diesem Kontext sowohl bedeuten, dass die Wiedergabe abgebrochen wird, als auch, dass die Wiedergabe unterbrochen wird.

In einer Ausführungsform ist der Kopfhörer dadurch gekennzeichnet, dass der Kopfhörer ferner einen Magnet, insbesondere eine magnetische Fläche, in unmittelbarer Umgebung zu dem NFC-Lesegerät umfasst, sodass eine weitere Vorrichtung, die neben dem NFC-Tag ferner eine magnetische oder magnetisierbare Komponente aufweist, magnetisch an dem Kopfhörer befestigt werden kann, um Audioinhalte zu entsperren und wiederzugeben.

In einer Ausführungsform ist der Kopfhörer dadurch gekennzeichnet, dass die magnetische Fläche des Kopfhörers planar ist, sodass die weitere Vorrichtung magnetisch an dem Kopfhörer befestigt werden kann, indem eine planare Fläche der weiteren Vorrichtung und die planare magnetische Fläche des Kopfhörers im Wesentlichen in Kontakt gebracht werden.

In einer Ausführungsform ist der Kopfhörer dadurch gekennzeichnet, dass die planare magnetische Fläche eine Grundfläche einer ersten Kavität bildet. In einer Ausführungsform ist der Kopfhörer dadurch gekennzeichnet, dass die erste Kavität derart dimensioniert ist, dass die weitere Vorrichtung passend in die erste Kavität eingesetzt werden kann. In einer Ausführungsform ist der Kopfhörer dadurch gekennzeichnet, dass die erste Kavität eine kreisförmige Grundfläche hat. In einer Ausführungsform ist der Kopfhörer dadurch gekennzeichnet, dass eine zweite Kavität auf einem Teil der Grundfläche der ersten Kavität definiert ist, sodass die weitere magnetisch befestigte Vorrichtung gekippt und dadurch von dem Kopfhörer entfernt werden kann.

In einer Ausführungsform ist der Kopfhörer dadurch gekennzeichnet, dass die Fläche der zweiten Kavität nicht magnetisch ist, sodass die an der magnetischen Grundfläche befestigte weitere Vorrichtung bei einem ungewollten Kippen in die zweite Kavität über magnetische Anziehungskraft wieder an die magnetische Grundfläche der ersten Kavität gezogen wird.

In einer Ausführungsform ist der Kopfhörer dadurch gekennzeichnet, dass die erste Kavität eine kreisförmige Grundfläche hat, die zweite Kavität auf einem Kreissegment dieser kreisförmigen Grundfläche definiert ist und eine schräge Ebene mit einem konstanten Winkel in Bezug auf die kreisförmige Grundfläche der ersten Kavität bildet.

In einer Ausführungsform ist der Kopfhörer dadurch gekennzeichnet, dass der Kopfhörer konfiguriert ist, eine Dateihistorie der wiedergegebenen Datei, die wiedergegebene Datei (im Speziellen zum Beispiel der Name der Datei und/oder den Pfad, unter dem die Datei gespeichert ist), die eindeutige Kennung des NFC-Tags, und einen Zeitstempel aufzuzeichnen.

In einer Ausführungsform ist der Kopfhörer dadurch gekennzeichnet, dass die Wiedergabe der Audiodatei nahtlos fortgeführt wird, wenn nach Beendigung der Wiedergabe der NFC-Tag erneut in die unmittelbare Umgebung des NFC-Lesegeräts gebracht wird.

In einer Ausführungsform ist der Kopfhörer dadurch gekennzeichnet, dass der Kopfhörer ferner einen Infrarotsensor umfasst, der konfiguriert ist, zu detektieren ob die Vorrichtung von einer Person getragen wird.

In einer Ausführungsform ist der Kopfhörer dadurch gekennzeichnet, dass die automatische Wiedergabe der Audiodatei nur erfolgt, falls der Infrarotsensor detektiert, dass der Kopfhörer von einer Person getragen wird.

In einer Ausführungsform ist der Kopfhörer dadurch gekennzeichnet, dass der Kopfhörer ein Muschelkopfhörer ist. In einer Ausführungsform ist der Kopfhörer dadurch gekennzeichnet, dass das NFC-Lesegerät in der rechten Kopfhörermuschel des Kopfhörers angebracht ist und die magnetische Fläche an der rechten Kopfhörermuschel des Kopfhörers angebracht ist. In einer Ausführungsform ist der Kopfhörer dadurch gekennzeichnet, dass der Kopfhörer eine Riffelung auf den Kopfhörermuscheln umfasst.

In einer Ausführungsform sind die ein oder mehreren Audiodateien unvollständige Audiodateien. Eine unvollständige Audiodatei der ein oder mehreren Audiodateien kann erst durch Daten, die über das NFC-Lesegerät ausgelesen werden, vervollständigt werden und Audioinhalte können erst nach dem Vervollständigen der unvollständigen Audiodatei wiedergegeben werden. Dadurch wird ein Schutz vor unberechtigtem Zugriff auf die Audioinhalte bewirkt.

Im Folgenden wird ein nicht beanspruchter Chip beschrieben, d.h. der beschriebene

Chip fällt als solcher nicht unter den Schutzumfang der angehängten Ansprüche. Der Chip, insbesondere aus Kunststoff, mit einem eingebetteten NFC-Tag ist konfiguriert, um einen RFID-Code, der eine eindeutige Kennung des NFC-Tags enthält, an ein NFC-Lesegerät zu übertragen, wenn der Chip in die unmittelbare Umgebung des NFC-Lesegeräts gebracht wird.

In einer Ausführungsform ist der Chip dadurch gekennzeichnet, dass der NFC-Tag eine im Wesentlichen radialsymmetrische, insbesondere eine ringförmige, Geometrie hat.

In einer weiteren Ausführungsform ist der Chip dadurch gekennzeichnet, dass ferner eine magnetisierte oder magnetisierbare Komponente in den Chip eingebettet ist, sodass der Chip durch magnetische Anziehungskraft an einer Oberfläche befestigt werden kann.

In einer Ausführungsform ist der Chip dadurch gekennzeichnet, dass der Chip mindestens eine planare Oberfläche hat, sodass der Chip magnetisch an einer planaren magnetischen Fläche befestigt werden kann, indem eine der mindestens einen planaren Fläche des Chips und die planare magnetische Fläche im Wesentlichen in Kontakt gebracht werden.

In einer Ausführungsform ist der Chip dadurch gekennzeichnet, dass das Gehäuse des Chips im Wesentlichen eine Radialsymmetrie aufweist und der NFC-Tag zentral in den Chip eingebettet ist und parallel zu einer der mindestens einen planaren Oberfläche des Chips ausgerichtet ist.

In einer Ausführungsform ist der Chip dadurch gekennzeichnet, dass der Chip im Wesentlichen eine plan-konvexe Geometrie, also eine planare Fläche und eine konvexe Fläche, aufweist.

In einer alternativen Ausführungsform ist der Chip dadurch gekennzeichnet, dass der Chip im Wesentlichen eine zylindrische Geometrie hat.

In einer Ausführungsform ist der Chip dadurch gekennzeichnet, dass die magnetisierte oder magnetisierbare Komponente ringförmig in den Chip eingebettet ist, wobei die magnetisierte oder magnetisierbare Komponente parallel zu einer der mindestens einen planaren Oberfläche des Chips ausgerichtet ist.

In einer Ausführungsform ist der Chip dadurch gekennzeichnet, dass im Anschluss an das Einbetten der Komponenten die zwei Hälften des Chips durch Ultraschallschweißen zusammengeschweißt werden.

In einer Ausführungsform ist der Chip dadurch gekennzeichnet, dass der NFC-Tag ein passiver Tag ist.

In einer Ausführungsform ist der Chip dadurch gekennzeichnet, dass der Chip eine im Wesentlichen zylindrische Geometrie hat, mit einem Durchmesser, der groß genug ist, dass Kinder den Chip nicht verschlucken können, und einer Höhe, die groß genug ist, dass ein NFC-Tag eingebettet werden kann. In einer Ausführungsform ist der Chip dadurch gekennzeichnet, dass der Chip einen Durchmesser von zwischen 40 Millimeter und 55 Millimeter und eine Höhe von zwischen 3 Millimeter und 10 Millimeter hat.

In einer Ausführungsform ist der Chip dadurch gekennzeichnet, dass der Chip auf mindestens einer Seite eine Vertiefung zum Anbringen eines Beschriftungsaufklebers hat.

In einer Ausführungsform ist der Chip dadurch gekennzeichnet, dass der Chip, wenn er in die unmittelbare Umgebung des NFC-Lesegeräts gebracht wird, konfiguriert ist, je nach Orientierung des Chips in Bezug auf das NFC-Lesegerät einen der Orientierung entsprechenden RFID-Code an das NFC-Lesegerät zu übertragen.

In einer Ausführungsform ist der Chip dadurch gekennzeichnet, dass ein Teil einer Audiodatei auf dem Chip gespeichert ist, wobei der Chip konfiguriert ist den Teil der Audiodatei an ein NFC-Lesegerät zu übertragen, wenn der Chip in die unmittelbare Umgebung des NFC-Lesegeräts gebracht wird. Der Teil der Audiodatei kann verschlüsselt sein. Alternativ oder zusätzlich kann der Chip konfiguriert sein den Teil der Audiodatei verschlüsselt an das NFC-Lesegerät zu übertragen. Audioinhalte die mit dem Teil der Audiodatei assoziiert sind können nur basierend auf einem Ergänzen des Teils der Audiodatei mittels einer komplementären Audiodatei wiedergegeben werden. Dadurch können die Audioinhalte vor unberechtigtem Zugriff geschützt werden.

In Ausführungsformen ist der Teil der Audiodatei auf einem Flash-Speicher gespeichert. Der Flash-Speicher kann vollständig mit einem Material ummantelt sein. Das Material kann einen Kunststoff oder ein Material auf pflanzlicher Basis umfassen. Durch das vollständige Ummanteln des Flash-Speichers kann ein Zugriff auf den Flash-Speicher durch Unbefugte verhindert werden, da jeder Versuch auf den Flash-Speicher zuzugreifen zu einer Zerstörung der Ummantelung und/oder des Chips führen würde.

In einer Ausführungsform umfasst ein erfindungsgemäßes Audioausgabe-System zur Wiedergabe von Audioinhalten einen Chip der einen NFC-Tag umfasst. Der NFC-Tag ist mit einer eindeutigen Kennung assoziiert. Ferner ist eine erste Teildatei auf dem Chip gespeichert. Des Weiteren umfasst das Audioausgabe-System ein Audioausgabegerät. Das Audioausgabegerät umfasst: einen Speicher, der ausgestaltet ist eine oder mehrere zweite Teildateien zu speichern, und ein NFC-Lesegerät. Jede der einen oder mehreren zweiten Teildateien ist einer eindeutigen Kennung zugeordnet. Das Audioausgabegerät konfiguriert ist, zum: Auslesen der eindeutigen Kennung des Chips; Empfangen der ersten Teildatei vom Chip; Bestimmen einer zweiten Teildatei der ein oder mehreren zweiten Teildateien anhand der ausgelesenen eindeutigen Kennung; und Automatischen Wiedergeben von Audioinhalten, die sich aus einer Kombination der ersten Teildatei vom Chip und der bestimmten zweiten Teildatei der ein oder mehreren zweiten Teildateien ergeben, wenn der NFC-Tag in die unmittelbare Umgebung des NFC-Lesegeräts gebracht wird. Die erste Teildatei kann Teil einer Audiodatei sein oder in eine Audiodatei umgewandelt werden. Die ein oder mehreren zweiten Teildateien können jeweils Teil einer Audiodatei sein oder in eine Audiodatei umgewandelt werden.

In Ausführungsformen sind die Audioinhalte, die mit der zweiten Teildatei assoziiert sind, gesperrt und können nur durch das Kombinieren oder Zusammenfügen der ersten Teildatei und der bestimmten zweiten Teildatei wiedergegeben werden. Die erste Teildatei kann verschlüsselt auf dem Chip gespeichert sein. Alternativ oder zusätzlich kann die erste Teildatei verschlüsselt an das NFC-Lesegerät übertragen werden. Das Audioausgabegerät kann konfiguriert sein die erste Teildatei basierend auf der ausgelesenen eindeutigen Kennung des Chips und/oder der bestimmten zweiten Teildatei zu entschlüsseln.

In Ausführungsformen können die auf dem Speicher gespeicherten ein oder mehreren zweiten Teildateien verschlüsselt sein. Das Audioausgabegerät kann konfiguriert sein die bestimmte zweite Teildatei basierend auf der ausgelesenen eindeutigen Kennung des Chips und/oder der empfangenen ersten Teildatei zu entschlüsseln. Das Audioausgabegerät kann ein Kopfhörer, insbesondere ein Muschelkopfhörer, sein.

Durch das Teilen der Audiodatei in zwei Teildateien kann die Audiodatei vor unberechtigtem Zugriff geschützt werden. Durch das verschlüsseln der Teildateien kann der Zugriff auf die Audiodatei durch Unberechtigte verhindert werden.

Der vorliegende Erfindungsgegenstand soll im Weiteren anhand beispielhafter Zeichnungen näher beschrieben werden. In den Zeichnungen sind Beispiele vorteilhafter Ausgestaltungen der Erfindung gezeigt.

Es zeigen:
**Figur 1** eine schematische Darstellung eines erfindungsgemäßen interaktiven Kopfhörer-Systems zum Speichern und zur Wiedergabe von Audioinhalten nach einer Ausführungsform,
**Figur 2** eine schematische Darstellung einer Vorrichtung zum Übertragen eines in einem NFC-Tag enthaltenen RFID-Codes an ein NFC-Lesegerät nach einer Ausführungsform,
**Figuren 3A** bis **3D** eine schematische Darstellung einer erfindungsgemäßen Kavität des Kopfhörers nach einer Ausführungsform,
**Figur 4** eine schematische Darstellung eines erfindungsgemäßen interaktiven Kopfhörer-Systems zum Speichern und zur Wiedergabe von Audioinhalten nach einer Ausführungsform, und
**Figur 5** ein schematisches Flussdiagramm eines Verfahrens nach einer Ausführungsform des erfindungsgemäßen interaktiven Kopfhörer-Systems.

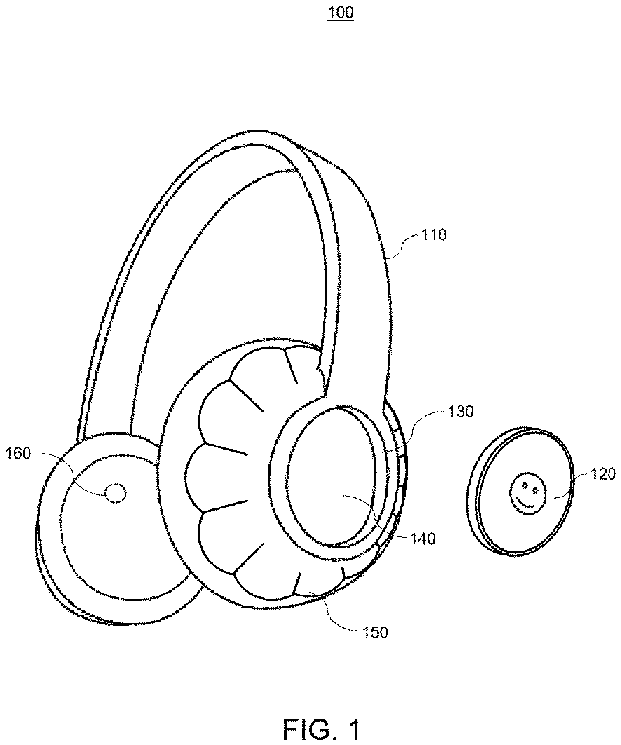

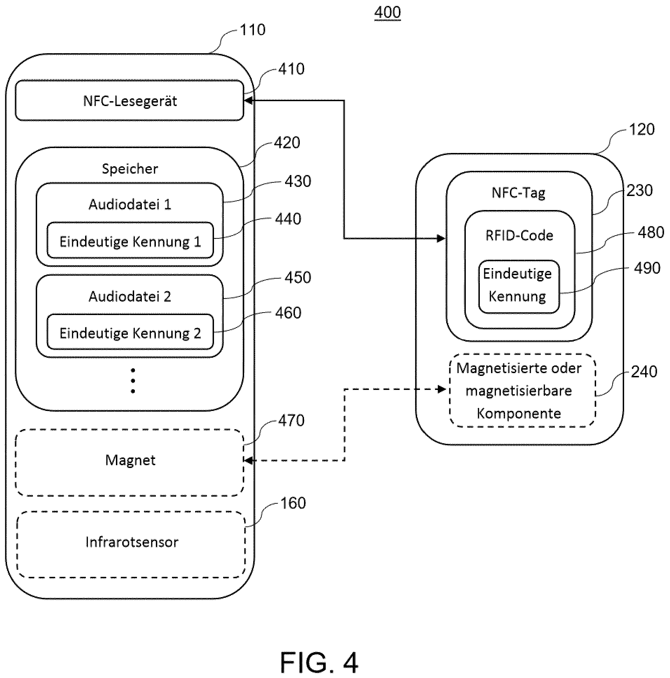

**Figur 1** zeigt ein erfindungsgemäßes interaktives Kopfhörer-System 100 zum Speichern und zur Wiedergabe von Audioinhalten. Das interaktive Kopfhörersystem 100 umfasst Kopfhörer 110 und einen NFC-Tag. Der NFC-Tag mit einem RFID-Code, welcher eine eindeutige Kennung des NFC-Tags enthält, kann in einen Chip, insbesondere Kunststoffchip 120, eingebettet sein. Es versteht sich, dass ein Chip ein flaches Bauteil mit ansonsten beliebiger Gehäuseform ist. Im Folgenden wird der Chip als bevorzugtes Ausführungsbeispiel in Form eines Kunststoffchips 120 beschrieben. Es sei angemerkt, dass der Chip insbesondere die Funktionalität eines Gehäuses darstellt, in das eine oder mehrere Komponenten eingebettet werden können, und neben der bevorzugten Ausführung aus Kunststoff in alternativen Ausführungsformen aus einem beliebigen anderen, eine ausreichende Stabilität gewährleistenden und für die Umsetzung der hierin beanspruchten Funktionalität tauglichen, Material, wie zum Beispiel aus Hartpapier, Keramik, Holz, Bioplastik oder vergleichbar stabilem Material, das biologisch abbaubar ist und/oder aus nachwachsenden Rohstoffen hergestellt wird, aufgebaut sein kann. Der Kopfhörer 110 kann eine Kavität 130, mit einer magnetischen Fläche 140, die eine Grundfläche der Kavität 130 bildet, umfassen. Der Kopfhörer 110 beinhaltet einen nicht näher dargestellten Speicher (schematisch abgebildet in Figur 4), der eine oder mehrere Audiodateien speichert, wobei jede der einen oder mehreren Audiodateien mit einer eindeutigen Kennung assoziiert ist, und wobei die eine oder mehreren Audiodateien gesperrt sind, sodass nur ein Zugriff durch einen RFID-Code, der eine eindeutigen Kennung enthält, die der eindeutigen Kennung einer jeweiligen Audiodatei entspricht, möglich ist. Der Speicher kann beispielsweise einen Speicherplatz von 10 Gigabyte, 20 Gigabyte oder 50 Gigabyte haben und zum Beispiel durch ein magnetisches, optisches oder halbleiterbasiertes Speichermedium realisiert sein. Noch konkreter kann der Speicher beispielsweise in Form eines Solid-State-Drives vorliegen.

Der Kopfhörer 110 beinhaltet ferner ein nicht näher dargestelltes NFC- Lesegerät (schematisch abgebildet in Figur 4). Wenn ein NFC-Tag mit einer eindeutigen Kennung, die der eindeutigen Kennung einer jeweiligen, auf dem Speicher des Kopfhörers gespeicherten, Audiodatei entspricht, in die unmittelbare Umgebung des NFC-Lesegeräts gebracht wird, ist der Kopfhörer 110 konfiguriert, den RFID-Code, der die eindeutige Kennung des NFC-Tags enthält, zu verarbeiten; die eindeutige Kennung des NFC-Tags mit der eindeutigen Kennung der auf dem Speicher gespeicherten Audiodatei zu korrelieren; die Audiodatei zu entsperren; und die Wiedergabe der Audiodatei automatisch zu starten. Die Wiedergabe kann automatisch beendet werden, wenn der NFC-Tag aus der unmittelbaren Umgebung des NFC-Lesegeräts entfernt wird. Ein Beenden der Wiedergabe kann ein Abbrechen der Wiedergabe, oder aber ein vorübergehendes Unterbrechen der Wiedergabe, bedeuten. Gemäß einer Ausführungsform kann die Wiedergabe nahtlos fortgesetzt werden, wenn der NFC-Tag nach einer unterbrochenen Wiedergabe erneut in die unmittelbare Umgebung des NFC-Lesegeräts gebracht wird.

Weiterhin enthält der Kopfhörer 110 entsprechende Schaltungstechnik, sodass das Kopfhörersystem 100 die hierin beschriebenen und beanspruchten Merkmale aufweisen und ausführen kann.

Der Kopfhörer 110 kann ferner einen Magnet, insbesondere eine magnetische Fläche 140, in unmittelbarer Umgebung zu dem NFC-Lesegerät umfassen. Beispielsweise kann das NFC-Lesegerät unmittelbar unterhalb der magnetischen Fläche 140 angebracht sein, sodass der Kunststoffchip 120 mit eingebettetem NFC-Tag zum Entsperren und Wiedergeben von Audioinhalten magnetisch an dem Kopfhörer 110 befestigt werden kann, für den Fall, dass der Kunststoffchip 120 derart eingerichtet ist, dass die magnetische Fläche 140 des Kopfhörers eine magnetische Anziehungskraft auf den Kunststoffchip 120 ausübt. In einer solchen Ausgestaltungsform kann die Wiedergabe der auf dem Speicher gespeicherten Audiodatei, deren eindeutige Kennung der eindeutigen Kennung des in dem Kunststoffchip 120 eingebetteten NFC-Tags entspricht, erfolgen, bis der Kunststoffchip 120 von der magnetischen Fläche 140 entfernt wird und/oder der Akku des Kopfhörers leer ist und/oder die entsperrte Audiodatei vollständig wiedergegeben wurde. Die magnetischen Fläche 140 kann beispielswiese die Oberfläche von einem Magneten sein. Die magnetische Fläche 140 kann in einer anderen Ausgestaltung aber auch eine Kunststofffläche sein, unter der ein Magnet eingebettet ist, wobei die Kunststofffläche und der darunterliegende Magnet so konzipiert und/oder dimensioniert sind, dass der Magnet eine magnetische Anziehungskraft auf magnetisierbare oder magnetisierte Gegenstände ausübt, die groß genug ist, dass diese an der magnetischen Fläche 140 haften. Als konkretes Beispiel kann die magnetische Fläche 140 so ausgelegt sein, dass der Kunststoffchip 120 mit eingebettetem NFC-Tag, der derart eingerichtet ist, dass er von der magnetischen Fläche 140 durch magnetische Anziehungskraft angezogen wird, eine magnetische Anziehungskraft erfährt, die groß genug ist, um den angehefteten Kunststoffchip 120 für jegliche räumliche Orientierung des Kopfhörers 110 und für normale Beschleunigungen des Kopfhörers 110 (zum Beispiel durch Laufbewegung, Springen, Kopfbewegung etc.) an dem Kopfhörer 110 zu fixieren.

Der Kopfhörer 110 kann eine Dateihistorie der wiedergegebenen Datei, die wiedergegebene Datei (im Speziellen zum Beispiel der Name der Datei und/oder der Pfad, unter dem die Datei gespeichert ist), die eindeutige Kennung des NFC-Tags und/oder die eindeutige Kennung der wiedergegebenen Datei, und einen Zeitstempel aufzeichnen. Wird die Wiedergabe zwischenzeitig unterbrochen, beispielsweise durch Entfernen des Kunststoffchips 120 von der magnetischen Fläche 140, durch Absetzen des Kopfhörers 110 und/oder durch Ausschalten des Kopfhörers 110, kann in einer solchen Ausgestaltung die Wiedergabe der Audiodatei nahtlos fortgesetzt werden, wenn der Kopfhörer 110 angeschaltet ist und der NFC-Tag nach Beendigung der Wiedergabe erneut in die unmittelbare Umgebung des NFC-Lesegeräts gebracht wird, beziehungsweise in einigen Ausgestaltungen der Kunststoffchip 120 mit dem eingebetteten NFC-Tag magnetisch an dem Kopfhörer 110 befestigt wird.

Der Kopfhörer 110 kann ferner Technologie zur Unterdrückung von ungewolltem Umgebungsschall beinhalten, diese kann aktives Noise-Cancelling und/oder passives Noise-Cancelling, zum Beispiel durch Geometrie und Materialwahl (zum Beispiel schalldämpfender Schaum) der verbauten Komponenten, umfassen. Durch eine entsprechende Schallunterdrückung kann der Umgebungsschallpegeldruck beispielsweise um 20 dB(A), um 25 dB(A) oder um 30 dB(A) reduziert werden.

Ferner kann der Kopfhörer 110 ein oder mehrere Bedienelemente (zum Beispiel ein oder mehrere von: einem Taster, Druckknopf, Wippenschalter, Kippschalter und -hebel, Drehknopf und -schalter, Schieber, Schiebeschalter) zum Bedienen des Kopfhörers 110 umfassen. Beispielsweise kann ein einmaliges Betätigen eines Druckknopfs den Kopfhörer 110 dazu veranlassen, eine Passage oder ein Lied zu überspringen, wohingegen eine wiederholte Betätigung des Druckknopfs den Kopfhörer 110 veranlassen kann, zur letzten Passage oder zum letzten Lied zurück zu springen. Weiterhin kann der Kopfhörer 110 beispielsweise ein oder mehrere Bedienelemente zum Einstellen der Lautstärke umfassen. Als konkretes Beispiel kann der Kopfhörer 110 einen Kipphebel zur Auswahl zwischen drei Wiedergabelautstärken von beispielsweise 65 dB(A), 75 dB(A) und 85 dB(A) umfassen.

In einigen Ausgestaltungen ist der Kopfhörer 110 ein Muschelkopfhörer. In dieser Ausgestaltung kann zum Beispiel das NFC-Lesegerät an der rechten Kopfhörermuschel angebracht sein. Weiterhin kann der Kopfhörer 110 in der Ausgestaltung als Muschelkopfhörer einen größenverstellbaren Kopfbügel umfassen, sodass der Kopfhörer 110 für Personen mit verschiedenen Kopfgrößen passend eingestellt werden kann. Beispielsweise kann in einer solchen Ausgestaltung der Kopfhörer 110 größenverstellbar speziell für Kinder im Alter zwischen drei und zehn Jahren konzipiert sein. Des Weiteren kann der Kopfhörer 110 in einer Ausgestaltung als Muschelkopfhörer Gelenke umfassen, die für einen erhöhten Tragekomfort eine Drehung einer jeden Kopfhörermuschel um zwei Achsen (zum Beispiel um eine x- und eine y-Achse) ermöglichen. Der Kopfhörer 110 kann außerdem eine Riffelung 150 auf den Kopfhörermuscheln umfassen, die eine verbesserte Handhabung des Kopfhörers 110, insbesondere für Kinder, ermöglichen und speziell das Einsetzen/Entnehmen des Kunststoffchips 120 durch eine verbesserte Ergonomie erleichtern.

Ferner kann der Kopfhörer 110 ein Anzeigelicht umfassen, das zum Beispiel grün leuchtet, wenn der Kopfhörer 110 angeschaltet ist, blau leuchtet, wenn der Kopfhörer 110 Daten verarbeitet, eine aktive Verbindung hat, oder sich im Paarungsmodus befindet, und rot leuchtet, wenn der Akku des Kopfhörers 110 fast leer ist. Als konkretes Beispiel kann das Anzeigelicht rot leuchten, wenn noch 40 Minuten oder weniger Restlaufzeit des Akkus bei normalem Betrieb verbleiben. Beispielsweise kann der Kopfhörer 110 alle 10 Minuten einen optischen und/oder akustischen Hinweis liefern, wenn noch 40 Minuten oder weniger Restlaufzeit des Akkus bei normalem Betrieb verbleiben. Als ergänzendes Beispiel kann der Kopfhörer 110 alle 2 Minuten einen optischen und/oder akustischen Hinweis liefern, wenn noch 10 Minuten oder weniger Restlaufzeit des Akkus bei normalem Betrieb verbleiben. Der Akku kann so ausgelegt sein, dass er in normalem Wiedergabebetrieb beispielsweise eine Akkulaufzeit von 10 Stunden, 12 Stunden, oder 14 Stunden hat und zum Beispiel in einem Schnellladevorgang innerhalb kurzer Zeit wieder aufgeladen werden kann.

Der Kopfhörer 110 kann einen Infrarotsensor 160 umfassen. Der Infrarotsensor 160 ist konfiguriert, um zu detektieren ob der Kopfhörer 110 von einer Person getragen wird. Wenn der NFC-Tag mit einer eindeutigen Kennung, die der eindeutigen Kennung einer auf dem Speicher des Kopfhörers 110 gespeicherten Audiodatei entspricht, in die unmittelbare Umgebung des NFC-Lesegeräts gebracht wird, kann das automatische Starten der Wiedergabe der Audiodatei in einer Ausgestaltung nur dann erfolgen, wenn der Infrarotsensor 160 detektiert, dass der Kopfhörer 110 von einer Person getragen wird. Ferner kann in solch einer Ausgestaltung eine laufende Wiedergabe unterbrochen werden, wenn der Infrarotsensor 160 detektiert, dass der Kopfhörer 110 abgesetzt wurde/nicht mehr von einer Person getragen wird. In einer Ausgestaltung als Muschelkopfhörer kann der Infrarotsensor 160 in einer bevorzugten Ausgestaltungsform an einer Kopfhörermuschel von Kopfhörer 110 angebracht sein, wie beispielhaft in Figur 1 gezeigt. In einer alternativen Ausgestaltung kann der Infrarotsensor 160 an dem Kopfbügel von Kopfhörer 110 angebracht sein.

Der Kopfhörer 110 kann ferner einen oder mehrere physische Anschlüsse, beispielsweise einen oder mehrere von einem USB-C-Anschluss und/oder einem USB-B-Anschluss, enthalten. In einer solchen Ausgestaltung kann einerseits der Akku des Kopfhörers 110 über den einen oder die mehreren physischen Anschlüsse geladen werden, andererseits kann ein entsprechender Anschluss auch zur Datenübertragung und zum Herstellen einer Verbindung zu einem Mobilfunkgerät, Smartphone, Tablet, oder Computer genutzt werden. In einer solchen Ausgestaltungsform kann nach dem Herstellen einer Verbindung zu einem Mobilfunkgerät, Smartphone, Tablet oder Computer über das Mobilfunkgerät, Smartphone, Tablet oder den Computer eine Applikation oder Website aufgerufen werden, über die Daten von dem Kopfhörer 110 auf eine Plattform (zum Beispiel eine Cloud, einen Server, etc.) hochgeladen werden können und Daten auf den Kopfhörer 110 heruntergeladen werden können. Der Datenaustausch mit zum Beispiel einem Server kann in dieser Ausgestaltung exemplarisch über eine WLAN-Verbindung des mit dem Kopfhörer 110 verbundenen Smartphones, Tablets oder Computers mit einem Router erfolgen.

Hochgeladene Daten können beispielsweise die eindeutige Kennung von einem NFC-Tag, der einen auf dem Kopfhörer 110 gespeicherten Audioinhalt entsperrt hat und den Kopfhörer 110 zur Wiedergabe des Audioinhalts veranlasst hat, umfassen. Weiterhin kann ein solcher NFC-Tag in einem zentralen Verzeichnis registriert werden. Im Speziellen kann auch ein NFC-Tag registriert werden, welcher zum Entsperren und zur Wiedergabe von auf dem Kopfhörer 110 gespeicherten Audioinhalten in die unmittelbare Umgebung des NFC-Lesegeräts des Kopfhörers 110 gebracht wurde und dessen eindeutige Kennung als qualifiziert zum Entsperren von Audioinhalten eingestuft wurde, für den jedoch ein entsprechender Audioinhalt beispielsweise nicht auf dem Kopfhörer gespeichert ist, der Audioinhalt beschädigt ist und somit nicht wiedergegeben werden konnte, und/oder der Audioinhalt nicht gelesen werden konnte.

Heruntergeladene Daten können zum Beispiel ein Update, eine Modifikation und/oder einen Downloadvorgang von auf dem Kopfhörer 110 gespeicherten/zu speichernden Audiodateien umfassen. Weiterhin können speziell Audiodateien auf den Kopfhörer 110 geladen werden, für welche es zuvor einen gescheiterten Versuch zum Entsperren und zur Wiedergabe durch einen entsprechenden NFC-Tag gegeben hat. Als weiteres Beispiel können neue Audioinhalte, welche bei anderen Nutzer beliebt sind, auf den Kopfhörer geladen werden.

Weiterhin kann der Kopfhörer 110 flach zusammengeklappt oder zusammengefaltet werden, sodass er platzsparend verstaut und transportiert werden kann. Der Kopfhörer 110 kann so konzipiert sein, dass sich die Einzelteile für den Benutzer nicht scharfkantig anfühlen, beispielsweise, indem Kanten mindestens mit einem Radius von einem Millimeter abgerundet sind. Außerdem können die Gelenke und beweglichen Komponenten des Kopfhörers 110 derart ausgelegt sein, dass sie sich reibungslos mit einem leichten Widerstand bewegen lassen. Des Weiteren können die Materialien des Kopfhörers 110 so gewählt sein, dass sie langlebig sind und robust gegen Abnutzung sind. Weiterhin kann der Kopfhörer 110 so konzipiert sein, dass das Gewicht gleichmäßig auf die beiden Seiten des Kopfhörers 110 verteilt ist.

Insbesondere stellt das interaktive Kopfhörer-System 100 eine Technologie bereit, die besonders für die Bedienung durch Kinder geeignet ist. Die simple Auslegung von sowohl Kopfhörer 110, als auch von Kunststoffchip 120 mit eingebettetem Kunststoffchip 230, und insbesondere das intuitive Zusammenspiel dieser Systemkomponenten in der Bedienung des Systems, ermöglicht es insbesondere Kindern, das interaktive Kopfhörer-System 100 spielerisch leicht zu bedienen und Audioinhalte selbstständig und ohne die Hilfe von beispielsweise den Eltern, älteren Geschwistern, oder einer Aufsichtsperson zur Wiedergabe freizugeben.

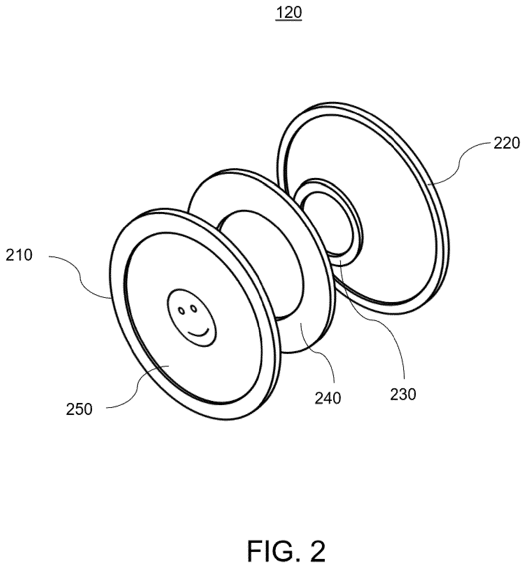

**Figur 2** zeigt eine schematische Darstellung einer Vorrichtung zum Übertragen eines in einem NFC-Tag enthaltenen RFID-Codes an ein NFC-Lesegerät nach einer Ausführungsform, im Speziellen eine Explosionsansicht des Kunststoffchips 120 aus Figur 1. Der Kunststoffchip 120 umfasst neben dem eigentlichen Gehäuse, das in einer Ausgestaltungsform aus zwei Hälften des Kunststoffchips 210 und 220 aufgebaut ist, einen NFC-Tag 230. Der NFC-Tag 230 ist mit einer eindeutigen Kennung programmiert und enthält einen RFID-Code, der diese eindeutige Kennung enthält. Der Kunststoffchip 120 mit eingebettetem NFC-Tag 230 ist konfiguriert, um den in dem NFC-Tag 230 enthaltenen RFID-Code an ein NFC-Lesegerät zu übertragen, beispielsweise an das in Kopfhörer 110 enthaltene NFC-Lesegerät, wenn der Kunststoffchip 120 in die unmittelbare Umgebung des NFC-Lesegeräts gebracht wird. Unmittelbare Umgebung bedeutet in diesem Kontext zumindest eine Entfernung zwischen NFC-Tag 230 und NFC-Lesegerät, die eine stabile und zuverlässige Datenübertragung über Near Field Communication gewährleistet. Es versteht sich folglich, dass der Term unmittelbare Umgebung im Kontext der NFC-Technologie ein Abstand von in jedem Fall maximal 10 cm zwischen NFC-Tag 230 und NFC-Lesegerät bedeutet. Abgesehen von diesem durch die Technologie intrinsisch gegebenem Maximalabstand kann die Kombination aus NFC-Tag 230 und NFC-Lesegerät beliebig konfiguriert sein. Entsprechend kann also die unmittelbare Umgebung je nach Ausgestaltungsform zum Beispiel 0,5 cm, 1 cm, 2 cm, oder 5 cm zwischen NFC-Tag 230 und NFC-Lesegerät bedeuten.

Der NFC-Tag 230 kann eine im Wesentlichen radialsymmetrische, insbesondere eine ringförmige, Geometrie haben. Eine solche Ausgestaltung ist in Figur 2 gezeigt. Eine im Wesentlichen radialsymmetrische Geometrie bedeutet, dass im Allgemeinen eine Radialsymmetrie vorliegt, diese aber zum Beispiel fertigungsbedingt durch kleine, nicht-radialsymmetrische Einkerbungen, oder auch zum Beispiel durch nicht-radialsymmetrische elektrische Anschlüsse gestört sein kann. Im Vordergrund steht bei der im Wesentlichen radialsymmetrischen Geometrie, dass die Übertragung des in dem NFC-Tag 230 enthaltenen RFID-Codes an ein NFC-Lesegerät rotationsinvariant gegenüber der Symmetrieachse gewährleistet werden kann. Das Gleiche gilt für die im Wesentlichen ringförmige Geometrie, die eine bevorzugte Ausgestaltung des NFC-Tags 230 darstellt.

Ferner kann eine magnetisierte oder magnetisierbare Komponente 240 in den Kunststoffchip 120 eingebettet sein, sodass der Kunststoffchip 120 durch magnetische Anziehungskraft an einer Oberfläche, zum Beispiel der magnetischen Fläche 140 aus Figur 1, einem Bauteil, oder einer Aussparung, befestigt werden kann.

Die magnetisierte oder magnetisierbare Komponente 240 kann eine im Wesentlichen radialsymmetrische, insbesondere eine ringförmige, Geometrie haben. Eine solche Ausgestaltung ist in Figur 2 dargestellt. Eine im Wesentlichen radialsymmetrische Geometrie bedeutet, dass im Allgemeinen eine Radialsymmetrie vorliegt, diese aber zum Beispiel fertigungsbedingt durch kleine, nicht-radialsymmetrische Einkerbungen gestört sein kann. Im Vordergrund steht bei der im Wesentlichen radialsymmetrischen Geometrie, dass das magnetische Befestigen des Kunststoffchips 120 an einer magnetischen Fläche, zum Beispiel der magnetischen Fläche 140 aus Figur 1, rotationsinvariant gegenüber der Symmetrieachse gewährleistet werden kann. Das Gleiche gilt für die im Wesentlichen ringförmige Geometrie, die eine bevorzugte Ausgestaltung der magnetisierten oder magnetisierbaren Komponente 240 darstellt. Die magnetisierte oder magnetisierbare Komponente 240 kann beispielsweise aus Eisen, Stahl, oder einem beliebigen anderen magnetisierten oder magnetisierbaren Material gefertigt sein.

Der Kunststoffchip 120 kann mindestens eine planare Oberfläche haben, sodass der Kunststoffchip 120 magnetisch an einer planaren magnetischen Fläche, zum Beispiel der magnetischen Fläche 140, befestigt werden kann, indem eine der mindestens einen planaren Fläche des Kunststoffchips 120 und die planare magnetische Fläche im Wesentlichen in Kontakt gebracht werden. Im Wesentlichen in Kontakt gebracht werden bedeutet, dass eine der mindestens einen planaren Oberfläche des Kunststoffchips 120 und die planare magnetische Fläche mindestens auf eine Distanz angenähert werden, bei der die magnetische Anziehungskraft ausreicht, um den Kunststoffchip 120 magnetisch an der magnetischen Fläche zu fixieren. Als konkretes Beispiel kann die Stärke der magnetischen Anziehungskraft im fixierten Zustand so ausgelegt sein, dass der Kunststoffchip 120 mit eingebettetem NFC-Tag 230, der derart eingerichtet ist, dass er von der magnetischen Fläche 140 durch magnetische Anziehungskraft angezogen wird, eine magnetische Anziehungskraft erfährt, die groß genug ist, um den angehefteten Kunststoffchip 120 für jegliche räumliche Orientierung des Kopfhörers 110 und für normale Beschleunigungen des Kopfhörers 110 (zum Beispiel durch Laufbewegung, Springen, Kopfbewegung etc.) an dem Kopfhörer 110 zu fixieren.

Das Gehäuse des Kunststoffchips 120 kann im Wesentlichen eine Radialsymmetrie aufweisen. Im Wesentlichen eine Radialsymmetrie bedeutet in diesem Kontext, dass im Allgemeinen eine Radialsymmetrie vorliegt, diese aber zum Beispiel fertigungsbedingt durch kleine, nicht-radialsymmetrische Einkerbungen gestört sein kann. Weiterhin sei angemerkt, dass sich die Radialsymmetrie des Gehäuses des Kunststoffchips 120 auf die Außengeometrie des Kunststoffchips 120 beschränkt, das heißt, dass der Kunststoffchip 120 von außen eine im Wesentlichen radialsymmetrische Geometrie hat. Diese Geometrie ermöglicht ein rotationsinvariantes Einsetzen des Kunststoffchips 120 in beispielsweise die Kavität 130 von Kopfhörer 110 aus Figur 1. Der NFC-Tag 230 kann zentral in den Kunststoffchip 120 eingebettet sein. Beispielsweise können sowohl der NFC-Tag 230, als auch das Gehäuse des Kunststoffchips 120 im Wesentlichen eine Radialsymmetrie aufweisen, wobei der NFC-Tag 230 derart in den Kunststoffchip 120 eingebettet ist, dass die Symmetrieachsen von dem NFC-Tag 230 und dem Gehäuse des Kunststoffchips 120 zusammenfallen. Weiterhin kann die magnetisierte oder magnetisierbare Komponente 240 zentral in den Kunststoffchip 120 eingebettet sein. Beispielsweise können sowohl der NFC-Tag 230, das Gehäuse des Kunststoffchips 120, und die magnetisierte oder magnetisierbare Komponente 240 im Wesentlichen eine Radialsymmetrie aufweisen, wobei der NFC-Tag 230 und die magnetisierte oder magnetisierbare Komponente 240 derart in den Kunststoffchip 120 eingebettet sind, dass die Symmetrieachsen von dem NFC-Tag 230, der magnetisierten oder magnetisierbaren Komponente 240 und dem Gehäuse des Kunststoffchips 120 zusammenfallen. Eine solche Ausgestaltungsform ist in der Explosionsansicht des Kunststoffchips 120 in Figur 2 illustriert. In solch einer Ausgestaltungsform sind also der NFC-Tag 230 und die magnetisierte oder magnetisierbare Komponente 240 parallel zu einer der mindestens einen planaren Oberfläche des Kunststoffchips 120 ausgerichtet.

Der Kunststoffchip 120 kann eine im Wesentlichen plan-konvexe Geometrie aufweisen. Dies bedeutet, dass der Kunststoffchip 120 eine planare Fläche und eine konvexe Fläche hat. Eine im Wesentlichen plan-konvexe Geometrie bedeutet in diesem Kontext, dass kleinere, zum Beispiel produktionsbedingte Abweichungen von einer rein plan-konvexen Geometrie, wie sie zum Beispiel bei einer plan-konvexen Linse gegeben ist, den plan-konvexen Charakter vor allem funktional nicht wesentlich beeinträchtigen. So kann beispielsweise in solch einer Ausgestaltung die planare Fläche des Kunststoffchips 120 über magnetische Anziehungskraft, welche von der magnetisierten oder magnetisierbaren Komponente 240 in Wechselwirkung mit der magnetischen Fläche 140 hervorgerufen wird, an dem Kopfhörer 110 fixiert werden, während die gegenüberliegende konvexe Fläche des Kunststoffchips 120 der Geometrie der Kopfhörermuschel folgt.

Alternativ kann der Kunststoffchip 120 eine im Wesentlichen zylindrische Geometrie haben. Eine im Wesentlichen zylindrische Geometrie bedeutet in diesem Kontext, dass das äußere Erscheinungsbild des Kunststoffchips 120 eine zylindrische Geometrie hat, wobei kleinere, zum Beispiel produktionsbedingte Abweichungen von einer rein zylindrischen Geometrie keine Einschränkung darstellen. Vielmehr ermöglicht diese Geometrie neben einem rotationsinvarianten Einsetzen des Kunststoffchips 120 in beispielsweise die Kavität 130 von Kopfhörer 110 aus Figur 1 weiterhin die Option, eine beliebige der zwei planaren Flächen des Kunststoffchips 120 im Wesentlichen in Kontakt mit beispielsweise der magnetischen Fläche 140 aus Figur 1 zu bringen.

Der Kunststoffchip 120 kann einen Aufbau aus zwei einzelnen Hälften 210 und 220 aufweisen. Dies ermöglicht ein einfaches Einbetten von Komponenten, wie zum Beispiel des NFC-Tags 230 und der magnetisierten oder magnetisierbaren Komponente 240. Die zwei Hälften des Kunststoffchips 210 und 220 können im Anschluss an das Einbetten von Komponenten durch Ultraschallschweißen zusammengeschweißt werden und so den Kunststoffchip 120 als geschlossenes Bauteil bilden.

Der NFC-Tag 230 kann beispielsweise ein passiver Tag sein, sodass zwischen einem NFC-Lesegerät, zum Beispiel dem NFC-Lesegerät des Kopfhörers 110, und dem NFC-Tag 230 eine aktiv-passive Kommunikation stattfinden kann. Beispielsweise kann das NFC-Lesegerät des Kopfhörers 110 ein elektromagnetisches Feld aussenden, wobei die übertragene Energie durch den NFC-Tag 230 aufgenommen wird und der NFC-Tag 230 so die empfangenen Befehle umsetzen kann. In Fortführung dieses Beispiels kann im Fall des Auslesens des NFC-Tags 230 das elektromagnetische Feld des NFC-Lesegeräts geschwächt werden oder das modulierte Signal gegenphasig reflektiert werden, wodurch das NFC-Lesegerät die gespeicherten Informationen einsehen kann.

Der Kunststoffchip 120 kann so dimensioniert sein, dass er im Wesentlichen eine zylindrische Geometrie hat und einen Durchmesser aufweist, der groß genug ist, dass Kinder den Kunststoffchip 120 nicht verschlucken können, und weiterhin eine Höhe aufweist, die groß genug ist, dass ein NFC-Tag eingebettet werden kann. Ein Durchmesser des Kunststoffchips 120, der groß genug ist, dass Kinder den Kunststoffchip 120 nicht verschlucken können minimiert das Risiko einer Erstickungsgefahr für Kinder durch Schlucken des Kunststoffchips 120. Neben einer Höhe des Kunststoffchips 120, die groß genug ist, dass ein NFC-Tag eingebettet werden kann, können noch weitere Faktoren die Höhenauslegung des Kunststoffchips 120 beeinflussen. So kann beispielsweise die Höhe groß genug gewählt werden, um neben dem NFC-Tag 230 noch die magnetisierte oder magnetisierbare Komponente 240 einbetten zu können und/oder weitere beliebige Komponenten einbetten zu können. Des Weiteren kann die Höhe des Kunststoffchips 120 so gewählt werden, dass der Kunststoffchip 120 ein Kriterium für eine Biegefestigkeit erfüllt, welche einen Bruch oder eine plastische Verformung des Bauteils verhindert. Als konkretes Beispiel kann der Kunststoffchip 120 einen Durchmesser von zwischen 40 Millimeter und 55 Millimeter und eine Höhe von zwischen 3 Millimeter und 10 Millimeter haben.

Der Kunststoffchip 120 kann auf einer Seite eine Vertiefung 250 zum Anbringen eines Beschriftungsaufklebers haben. Der Beschriftungsaufkleber kann in solch einer Ausgestaltungsform einen Hinweis darauf geben, welcher Audioinhalt mit dem entsprechenden Kunststoffchip 120 mit eingebettetem NFC-Tag 230 zur Wiedergabe entsperrt werden kann. Die Vertiefung 250 kann eine beliebige Geometrie haben, zum Beispiel zylinderförmig, mit einer Tiefe von beispielsweise 0,5 Millimeter, 0,8 Millimeter oder 1,0 Millimeter und einem Durchmesser, der beliebig groß, aber zumindest kleiner als der Durchmesser des Kunststoffchips 120, ist.

Der Kunststoffchip kann konfiguriert sein, dass er, wenn er in die unmittelbare Umgebung des NFC-Lesegeräts gebracht wird, je nach Orientierung des Kunststoffchips in Bezug auf das NFC-Lesegerät einen der Orientierung entsprechenden RFID-Code an das NFC-Lesegerät überträgt. Dadurch kann je nach Orientierung des Kunststoffchips in Bezug auf das NFC-Lesegerät ein unterschiedlicher Audioinhalt zur automatischen Wiedergabe entsperrt werden. Entsprechend kann in einer Ausgestaltungsform exemplarisch der zylinderförmige Kunststoffchip 120 magnetisch an dem Kopfhörer 110 befestigt werden, indem eine erste planare Fläche des Kunststoffchips 120 und die planare magnetische Fläche des Kopfhörers im Wesentlichen in Kontakt gebracht werden, um durch Übertragung eines entsprechenden, ersten RFID-Codes auf dem Kopfhörer gespeicherten Audioinhalt zu entsperren und automatisch wiederzugeben. In Fortführung dieses Beispiels kann der Kunststoffchip exemplarisch nach erfolgreicher Wiedergabe des ersten Audioinhalts gewendet werden, somit kann die zweite planare Fläche des Kunststoffchips 120 und die planare magnetische Fläche des Kopfhörers im Wesentlichen in Kontakt gebracht werden und durch Übertragung eines entsprechenden, zweiten RFID-Codes ein zweiter Audioinhalt zur automatischen Wiedergabe freigegeben werden. Analog zu Schallplatten und Audiokassetten weist der Kunststoffchip in dieser Ausgestaltungsform entsprechend funktional eine A- und eine B-Seite, beziehungsweise eine Vorder- und Rückseite, auf.

Der Vollständigkeit halber sei angemerkt, dass in einer alternativen Ausgestaltung der Kunststoffchip 120, wenn er in die unmittelbare Umgebung des NFC-Lesegeräts gebracht wird, unabhängig von seiner Orientierung in Bezug auf das NFC-Lesegerät einen RFID-Code an ein NFC-Lesegerät übertragen kann. Zum Beispiel kann in einer Ausgestaltungsform der zylinderförmige Kunststoffchip magnetisch an dem Kopfhörer 110 befestigt werden, indem eine planare Fläche des Kunststoffchips 120 und die planare magnetische Fläche des Kopfhörers im Wesentlichen in Kontakt gebracht werden, um einen auf dem Kopfhörer gespeicherten Audioinhalt zu entsperren und automatisch wiederzugeben. In dieser Ausgestaltung ist es nicht von Bedeutung, welche der beiden planaren Flächen des Kunststoffchips 120 mit der planaren magnetischen Fläche des Kopfhörers im Wesentlichen in Kontakt gebracht werden, da der Kunststoffchip unabhängig von der zum Kopfhörer 110 gewandten Seite denselben Audioinhalt zur Wiedergabe entsperren kann.

In einer Ausführungsform ist der Kunststoffchip dadurch gekennzeichnet, dass der Kunststoffchip, wenn er in die unmittelbare Umgebung des NFC-Lesegeräts gebracht wird, konfiguriert ist, je nach Orientierung des Kunststoffchips in Bezug auf das NFC-Lesegerät einen zweiten RFID-Code an das NFC-Lesegerät zu übertragen.

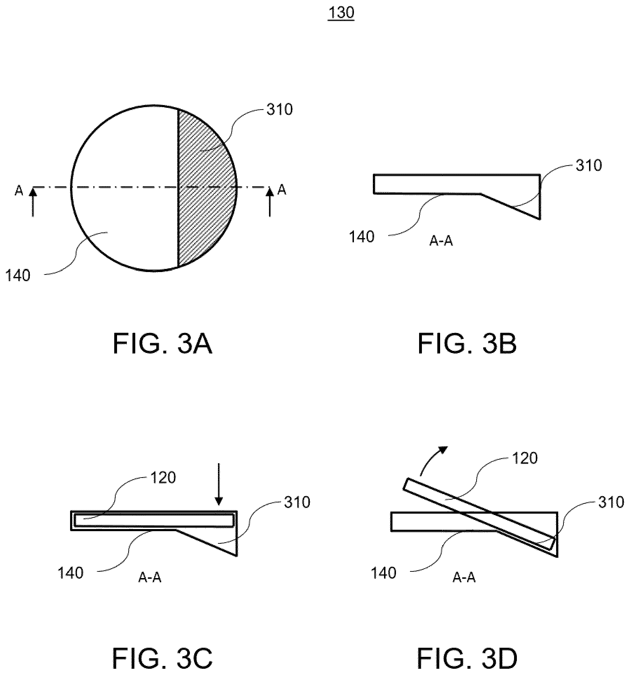

**Figuren 3A** bis **3D** zeigen eine schematische Darstellung einer erfindungsgemäßen Kavität 130 des Kopfhörers 110. **Figur 3A** zeigt eine schematische Draufsicht der Kavität 130 nach Figur 1. Die planare magnetische Fläche 140 des Kopfhörers 110 kann die Grundfläche einer ersten Kavität bilden, die erste Kavität kann in diesem Beispiel die Kavität 130 sein. Außerdem kann die erste Kavität eine Geometrie aufweisen, die geeignet ist, um den Kunststoffchip 120 in lateraler Richtung zu fixieren. Figur 3A zeigt beispielsweise eine kreisförmige Grundfläche der Kavität 130, welche passend ist, um zum Beispiel einen zylinderförmigen Kunststoffchip mit geeignetem Durchmesser lateral zu fixieren. In Fortführung dieses Beispiels kann der Durchmesser der Kavität 130 zum Beispiel 1 Millimeter, 2 Millimeter, oder 3 Millimeter größer sein, als der Außendurchmesser des Kunststoffchips 120.

Weiterhin kann eine zweite Kavität 310 auf einem Teil der Grundfläche der ersten Kavität definiert sein. Dies ermöglicht einen Mechanismus, der erlaubt, dass ein magnetisch befestigter Kunststoffchip 120 durch Ausüben von Druck auf einen Teil des Kunststoffchips 120, der in der Draufsicht mit der zweiten Kavität 310 überlappt, in die zweite Kavität 310 gekippt wird und dadurch ergonomisch von dem Kopfhörer 110 entnommen werden kann.

Die Fläche der zweiten Kavität 310 kann ausgelegt sein, nicht magnetisch zu sein, sodass ein an der magnetischen Fläche 140 der ersten Kavität magnetisch befestigter Kunststoffchip 120 bei einem ungewollten Kippen in die zweite Kavität 310 über magnetische Anziehungskraft wieder an die magnetische Fläche 140 der ersten Kavität gezogen wird. Diese Ausgestaltung vermeidet vorteilhaft den unbeabsichtigten Verlust des Kunststoffchips 120 mit eingebettetem NFC-Tag 230 durch das Verhindern einer instabilen, gekippten und damit nicht fluchtenden Anordnung der Systemkomponenten, die anfällig für einen den magnetischen Eingriff auflösenden Kontakt wäre. Ein ungewolltes Kippen des Kunststoffchips 120 kann beispielsweise durch eine ruckartige Bewegung, oder auch durch ein versehentliches Ausüben von Druck auf einen Teil des Kunststoffchips 120, der in der Draufsicht mit der zweiten Kavität 310 überlappt, ausgelöst werden.

Die erste Kavität kann zum Beispiel eine kreisförmige Grundfläche haben, während die zweite Kavität 310 auf einem Kreissegment dieser kreisförmigen Grundfläche definiert ist und eine schräge Ebene mit einem konstanten Winkel in Bezug auf die kreisförmige Grundfläche der ersten Kavität bildet. Diese spezielle Ausgestaltungsform ist in Figur 3A gezeigt. Die Segmenthöhe des Kreissegments kann beliebig gewählt werden, zum Beispiel 25%, 35 %, oder 50% des Durchmessers der ersten Kavität. Der konstante Winkel kann ebenfalls beliebig gewählt werden, zum Beispiel 10 Grad, 25 Grad, oder 40 Grad in Bezug auf die planare Grundfläche der ersten Kavität.

**Figur 3B** zeigt eine Seitenansicht der schematischen Darstellung einer erfindungsgemäßen Kavität 130 des Kopfhörers 110 und illustriert die magnetische Fläche 140 der ersten Kavität und weiterhin die zweite Kavität 310, die in der gezeigten Ausgestaltungsform eine planare Fläche mit einem konstanten Winkel in Bezug auf die magnetische Fläche 140 der ersten Kavität darstellt.

**Figuren 3C** und **3D** zeigen die Seitenansicht der schematischen Darstellung einer erfindungsgemäßen Kavität 130 des Kopfhörers 110 in Kombination mit einem eingesetzten Kunststoffchip 120 in zwei verschieden Positionen. **Figur** 3C zeigt den Kunststoffchip 120, der im Wesentlichen in Kontakt mit der magnetischen Fläche 140 der ersten Kavität ist und über magnetische Anziehungskraft an die magnetischen Fläche 140 gezogen wird. Ein Teil des Kunststoffchips überlappt mit der zweiten Kavität 310, sodass ein Hohlraum unter diesem Teil des Kunststoffchips vorliegt. Wird nun auf diesen Teil des Kunststoffchips Druck auf den Kunststoffchip 120 ausgeübt (illustriert durch den Pfeil in Figur 3C), kann dieser in die zweite Kavität 310 kippen und so in die in Figur 3D dargestellte Stellung gebracht werden.

Von der in **Figur 3D** dargestellten Stellung kann der Kunststoffchip 120 ergonomisch aus der Kavität 130 entnommen werden (illustriert durch den Pfeil in Figur 3D). Falls der Kunststoffchip 120 in dieser Position nicht entnommen wird, kann er jedoch auch automatisch zurück an die magnetische Grundfläche 140 gezogen werden, für den Fall, dass die Grundfläche der zweiten Kavität 310 nicht magnetisch ist.

**Figur 4** zeigt eine schematische Darstellung 400 eines erfindungsgemäßen interaktiven Kopfhörer-Systems zum Speichern und zur Wiedergabe von Audioinhalten nach einer Ausführungsform. Schematisch abgebildet ist der Aufbau von Kopfhörer 110 und von Kunststoffchip 120. Wie oben bereits eingeführt, umfasst der Kopfhörer 110 das NFC-Lesegerät 410 und den Speicher 420. Auf dem Speicher 420 sind ein oder mehrere Audiodateien, zum Beispiel Audiodatei 1 430 und Audiodatei 2 450, gespeichert. Jeder Audiodatei ist eine eindeutige Kennung zugewiesen, zum Beispiel eindeutige Kennung 1 440 zu Audiodatei 1 430 und eindeutige Kennung 2 460 zu Audiodatei 2 450. Es kann eine beliebige Anzahl an weiteren Audiodateien mit zugehörigen eindeutigen Kennungen auf dem Speicher 420 des Kopfhörers 110 gespeichert sein. Der Zugriff auf die auf dem Speicher 420 gespeicherten Audiodateien ist gesperrt. Der Kopfhörer 110 kann weiterhin einen Magnet 470, insbesondere die magnetische Fläche 140, umfassen, wie bereits oben eingeführt. Weiterhin kann der Kopfhörer 110 den Infrarotsensor 160 enthalten, wie bereits oben eingeführt.

Der Kunststoffchip 120 umfasst den RFID-Code 480 und die dem NFC-Tag 230 zugeordnete eindeutige Kennung 490. Der Kunststoffchip 120 kann weiterhin eine magnetisierte oder magnetisierbare Komponente 240 umfassen, wie bereits oben eingeführt.

Wird der NFC-Tag 230 in die unmittelbare Umgebung des NFC-Lesegeräts 410 des Kopfhörers 110 gebracht (illustriert durch den durchgezogenen Pfeil in Figur 4), ist der Kopfhörer konfiguriert, den auf dem NFC-Tag 230 enthaltenen RFID-Code 480 auszulesen, die eindeutige Kennung 490 aus dem RFID-Code 480 zu ermitteln, die eindeutige Kennung 490 mit eindeutigen Kennungen 440 und 460 von auf dem Speicher 420 gespeicherten Audiodateien 430 und 450 zu vergleichen, eine entsprechende Audiodatei zu entsperren für den Fall, dass die eindeutige Kennung 490 mit einer eindeutigen Kennung 440, 460 einer gespeicherten Audiodatei 430, 450 übereinstimmt, und die Wiedergabe der entsprechenden Audiodatei zu starten. Beispielsweise kann das NFC-Lesegerät 410 bestimmen, dass die eindeutige Kennung 490 nicht mit der eindeutigen Kennung 1 440 übereinstimmt, die eindeutige Kennung 490 dafür aber mit der eindeutigen Kennung 2 460 übereinstimmt und als Reaktion auf diese Feststellung kann der Kopfhörer 110 die Audiodatei 2 450 entsperren und die Wiedergabe von Audiodatei 2 450 automatisch starten.

Wie bereits oben eingeführt, kann eine magnetische Anziehung (illustriert durch den gestrichelten Pfeil in Figur 4) zwischen Kopfhörer 110 und Kunststoffchip 120 durch einerseits den Magnet 470, insbesondere die magnetische Fläche 140, und andererseits durch die magnetisierte oder magnetisierbare Komponente 240 gewährleistet werden, wenn der Kunststoffchip 120 in die unmittelbare Umgebung des Kopfhörers 110 gebracht wird.

Weiterhin kann, wie bereits oben eingeführt, der Infrarotsensor 160 konfiguriert sein, um zu detektieren ob der Kopfhörer 110 von einer Person getragen wird. Wenn der NFC-Tag 230 in die unmittelbare Umgebung des NFC-Lesegeräts 410 gebracht wird, kann in einer Ausgestaltung das automatische Starten der Wiedergabe der Audiodatei nur dann erfolgen, wenn der Infrarotsensor 160 detektiert, dass der Kopfhörer 110 von einer Person getragen wird. Ferner kann in solch einer Ausgestaltung eine laufende Wiedergabe unterbrochen werden, wenn der Infrarotsensor 160 detektiert, dass der Kopfhörer 110 abgesetzt wurde/nicht mehr von einer Person getragen wird.

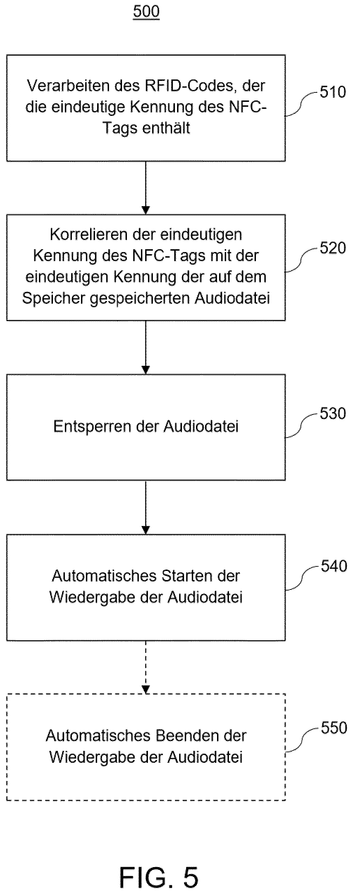

**Figur 5** zeigt ein schematisches Flussdiagramm 500 einer Ausführungsform des erfindungsgemäßen interaktiven Kopfhörer-Systems. Der Ablauf von Flussdiagramm 500 wird durch das interaktive Kopfhörersystem 100, insbesondere den Kopfhörer 110, ausgeführt, wenn der NFC-Tag 230 mit einer eindeutigen Kennung 490, die der eindeutigen Kennung 440, 460 einer auf dem Speicher 420 gespeicherten Audiodatei 430, 450 entspricht, in die unmittelbare Umgebung des NFC-Lesegeräts 410 gebracht wird. Flussdiagramm 500 startet mit Schritt 510, dem Verarbeiten des RFID-Codes 480, der die eindeutige Kennung des NFC-Tags 490 enthält, welcher der eindeutigen Kennung der Audiodatei entspricht. Im nächsten Schritt 520 wird die eindeutige Kennung 490 des NFC-Tags 230 mit der eindeutigen Kennung der auf dem Speicher 420 gespeicherten Audiodatei korreliert. Diese Audiodatei wird bei Schritt 530 zunächst entsperrt. Schritt 540 umfasst das automatische Starten der Wiedergabe der Audiodatei. Optional folgt Schritt 550, welcher das automatische Beenden der Wiedergabe der Audiodatei beinhaltet.

## Patentansprüche

1. Kopfhörer (110) mit
- einem Speicher (420), auf dem eine oder mehrere Audiodateien (430; 450) gespeichert sind, wobei jede der einen oder mehreren Audiodateien (430; 450) mit einer eindeutigen Kennung (440; 460) assoziiert ist, und wobei die eine oder mehreren Audiodateien (430; 450) gesperrt sind, sodass nur Zugriff durch einen RFID-Code, der eine eindeutigen Kennung enthält, die der eindeutigen Kennung (440; 460) einer jeweiligen Audiodatei (430; 450) entspricht, möglich ist; und
- einem NFC-Lesegerät (410), das konfiguriert ist, eine eindeutige Kennung (490) eines NFC-Tags (230), der in die unmittelbare Umgebung des NFC-Lesegeräts (410) des Kopfhörers (110) gebracht wird, auszulesen, wodurch der Kopfhörer (110) veranlasst wird:
die eindeutige Kennung des NFC-Tags (490) mit eindeutigen Kennungen (440; 460) von auf dem Speicher gespeicherten Audiodateien (430; 450) zu vergleichen;
eine entsprechende Audiodatei (430; 450) zu entsperren für den Fall, dass die eindeutige Kennung des NFC-Tags (490) mit einer eindeutigen Kennung (440; 460) einer gespeicherten Audiodatei (430; 450) übereinstimmt; und
die Wiedergabe der entsprechenden Audiodatei (430; 450) automatisch zu starten.

2. Kopfhörer nach Anspruch 1, **gekennzeichnet dadurch, dass** mindestens eines der Folgenden:
i) die Wiedergabe automatisch beendet wird, wenn der NFC-Tag (230) aus der unmittelbaren Umgebung des NFC-Lesegeräts (410) entfernt wird;
ii) der Kopfhörer konfiguriert ist, die wiedergegebene Datei, die eindeutige Kennung des NFC-Tags (490), und einen Zeitstempel aufzuzeichnen, sodass nach Beendigung einer laufenden Wiedergabe die Wiedergabe der Audiodatei (430; 450) nahtlos fortgeführt wird, wenn der NFC-Tag (230) erneut in die unmittelbare Umgebung des NFC-Lesegeräts (410) gebracht wird; und
iii) die ein oder mehreren Audiodateien (430; 450) unvollständige Audiodateien sind, wobei eine unvollständige Audiodatei der ein oder mehreren Audiodateien (430; 450) erst durch Daten, die über das NFC-Lesegerät (410) ausgelesen werden, vervollständigt wird und Audioinhalte erst nach dem Vervollständigen der unvollständigen Audiodatei wiedergegeben werden.

3. Kopfhörer nach einem der Ansprüche 1 und 2, wobei der Kopfhörer ferner einen Magnet (470), insbesondere eine magnetische Fläche (140), in unmittelbarer Umgebung zu dem NFC-Lesegerät (140) umfasst, sodass eine weitere Vorrichtung, die neben dem NFC-Tag (230) ferner eine magnetische oder magnetisierbare Komponente (240) aufweist, zum Entsperren und Wiedergeben von Audioinhalten magnetisch an dem Kopfhörer (110) befestigt werden kann.

4. Kopfhörer nach Anspruch 3, **gekennzeichnet dadurch, dass** der Kopfhörer mindestens die magnetische Fläche in unmittelbarer Umgebung zu dem NFC-Lesegerät (140) umfasst und die magnetische Fläche (140) eine Grundfläche einer ersten Kavität (130) bildet.

5. Kopfhörer nach Anspruch 4, **gekennzeichnet dadurch, dass** eine zweite Kavität (310) auf einem Teil der Grundfläche der ersten Kavität definiert ist, sodass die weitere magnetisch befestigte Vorrichtung gekippt und dadurch von dem Kopfhörer (110) entfernt werden kann.

6. Kopfhörer nach Anspruch 5, **gekennzeichnet dadurch, dass** die Fläche der zweiten Kavität nicht magnetisch ist, sodass die an der magnetischen Grundfläche befestigte Vorrichtung bei einem ungewollten Kippen in die zweite Kavität (310) über magnetische Anziehungskraft wieder an die magnetische Grundfläche der ersten Kavität gezogen wird.

7. Interaktives Kopfhörer-System (100) zum Speichern und zur Wiedergabe von Audioinhalten, umfassend:
einen NFC-Tag (230) mit einem RFID-Code (480), der eine eindeutige Kennung (490) des NFC-Tags enthält; und
den Kopfhörer (110) nach Anspruch 1.

8. System nach Anspruch 7, **gekennzeichnet dadurch, dass** mindestens eines der Folgenden:
i) die Wiedergabe automatisch beendet wird (550), wenn der NFC-Tag (230) aus der unmittelbaren Umgebung des NFC-Lesegeräts (410) entfernt wird;
ii) der NFC-Tag (230) in einen Chip, insbesondere aus Kunststoff (120), eingebettet ist;
iii) die wiedergegebene Datei, die eindeutige Kennung des NFC-Tags (490), und ein Zeitstempel aufgezeichnet werden, sodass nach Beendigung einer laufenden Wiedergabe die Wiedergabe der Audiodatei (430; 450) nahtlos fortgeführt wird, wenn der NFC-Tag (230) erneut in die unmittelbare Umgebung des NFC-Lesegeräts (410) gebracht wird; und
iv) der Kopfhörer (110) ferner einen Infrarotsensor (160) umfasst, der konfiguriert ist, zu detektieren ob der Kopfhörer (110) von einer Person getragen wird und die automatische Wiedergabe der Audiodatei (430; 450) nur erfolgt, falls der Infrarotsensor (160) detektiert, dass der Kopfhörer (110) von einer Person getragen wird.

9. System nach Anspruch 8, **gekennzeichnet dadurch, dass** der Kopfhörer ferner einen Magnet (470), insbesondere eine magnetische Fläche (140), in unmittelbarer Umgebung zu dem NFC-Lesegerät (410) umfasst, der NFC-Tag (230) in einen Chip eingebettet ist und in den Chip eine magnetisierte oder magnetisierbare Komponente (240) eingebettet ist, sodass der Chip zum Entsperren und Wiedergeben von Audioinhalten magnetisch an dem Kopfhörer (110) befestigt werden kann.

10. System nach Anspruch 9, **gekennzeichnet dadurch, dass** mindestens eines der Folgenden:
i) der Chip, der NFC-Tag (230) und die magnetisierte oder magnetisierbare Komponente (240) im Wesentlichen eine Radialsymmetrie aufweisen und eine identische Symmetrieachse haben, wobei der NFC-Tag (230) und die magnetisierte oder magnetisierbare Komponente (240) insbesondere eine im Wesentlichen ringförmige Geometrie haben; und
ii) die magnetische Fläche (140) des Kopfhörers (110) eine Grundfläche einer ersten Kavität (130) bildet, wobei die erste Kavität (130) eine Geometrie aufweist, die geeignet ist, den Chip in lateraler Richtung zu fixieren.

11. System nach Anspruch 10, **gekennzeichnet dadurch, dass** eine zweite Kavität (310) auf einem Teil der Grundfläche der ersten Kavität definiert ist, sodass der magnetisch befestigte Chip, durch Ausüben von Druck auf die Chip-Fläche, die mit der zweiten Kavität (310) überlappt, in die zweite Kavität (310) gekippt und dadurch von dem Kopfhörer (110) entnommen werden kann.

12. System nach Anspruch 11, **gekennzeichnet dadurch, dass** die Fläche der zweiten Kavität nicht magnetisch ist, sodass der an der magnetischen Grundfläche befestigte Chip bei einem ungewollten Kippen in die zweite Kavität (310) über magnetische Anziehungskraft wieder an die magnetische Grundfläche der ersten Kavität gezogen wird.

13. System nach einem der Ansprüche 9 bis 12, **gekennzeichnet dadurch, dass** der Magnet (470), und die magnetisierte oder magnetisierbare Komponente (240) derart ausgestaltet sind, dass ein Geräusch am Ohr des Nutzers durch das Befestigen des Chips durch die magnetische Anziehungskraft an der magnetischen Fläche (140) unter einem Schwellwert liegt, wobei vorzugsweise der Schwellwert einen Schalldruckpegel von zwischen 85 dB und 100 dB umfasst.

14. System nach einem der Ansprüche 7 bis 13, **gekennzeichnet dadurch, dass**, wenn der NFC-Tag (230) mit der eindeutigen Kennung (490) in die unmittelbare Umgebung des NFC-Lesegeräts (410) gebracht wird, der Kopfhörer (110) konfiguriert ist, zum:
Empfangen einer komplementären Audiodatei von einem den NFC-Tag (230) einbettenden Chip;
Ergänzen der auf dem Speicher gespeicherten Audiodatei (430; 450) mit der komplementären Audiodatei für die Wiedergabe (540) der Audiodatei (430; 450).

15. System nach Anspruch 14, **gekennzeichnet dadurch, dass** mindestens eines der Folgenden:
i) die auf dem Speicher gespeicherte Audiodatei (430; 450) unvollständig ist und durch die komplementäre Audiodatei vervollständigt wird, wobei der Kopfhörer nur vollständige Audiodateien wiedergeben kann; und
ii) die empfangene komplementäre Audiodatei verschlüsselt ist und der Kopfhörer (110) konfiguriert ist die empfangene verschlüsselte komplementäre Audiodatei zu entschlüsseln, wobei vorzugsweise die auf dem Speicher gespeicherten Audiodateien (430; 450) verschlüsselt sind, und der Kopfhörer (110) konfiguriert ist die auf dem Speicher gespeicherten Audiodateien (430; 450) mittels der empfangenen verschlüsselten komplementären Audiodateien zu entschlüsseln.

16. Interaktives Audioausgabe-System (100) zur Wiedergabe von Audioinhalten, umfassend:
einen Chip (120) der einen NFC-Tag (230) umfasst, wobei der NFC-Tag (230) mit einer eindeutigen Kennung (490) assoziiert ist, wobei ferner eine erste Teildatei auf dem Chip (120) gespeichert ist; und
ein Audioausgabegerät, umfassend:
einen Speicher (420), der ausgestaltet ist eine oder mehrere zweite Teildateien (430; 450) zu speichern, wobei jede der einen oder mehreren zweiten Teildateien (430; 450) einer eindeutigen Kennung (440; 460) zugeordnet ist; und
ein NFC-Lesegerät (410),
wobei, wenn der NFC-Tag (230) in die unmittelbare Umgebung des NFC-Lesegeräts (410) gebracht wird, das Audioausgabegerät konfiguriert ist, zum:
Auslesen der eindeutigen Kennung (490) des Chips (120);
Empfangen der ersten Teildatei vom Chip (120);
Bestimmen einer zweiten Teildatei der ein oder mehreren zweiten Teildateien (430; 450) anhand der ausgelesenen eindeutigen Kennung (490); und
Automatischen Wiedergeben von Audioinhalten, die sich aus einer Kombination der ersten Teildatei vom Chip (120) und der bestimmten zweiten Teildatei der ein oder mehreren zweiten Teildateien (430; 450) ergeben,
wobei das Audioausgabegerät ein Kopfhörer (110), insbesondere ein Muschelkopfhörer, ist.

17. Interaktives Audioausgabe-System (100) nach Anspruch 16, **gekennzeichnet dadurch, dass** mindestens eines der Folgenden:
i) Audioinhalte, die mit der zweiten Teildatei assoziiert sind, gesperrt sind und nur durch das Kombinieren der ersten Teildatei und der zweiten Teildatei wiedergegeben werden können;
ii) die erste Teildatei verschlüsselt auf dem Chip gespeichert wird und/oder die erste Teildatei verschlüsselt an das NFC-Lesegerät (410) übertragen wird, wobei das Audioausgabegerät konfiguriert ist zum Entschlüsseln der ersten Teildatei basierend auf der ausgelesenen eindeutigen Kennung (490) des Chips und/oder der bestimmten zweiten Teildatei;
iii) die auf dem Speicher gespeicherten ein oder mehreren zweiten Teildateien (430; 450) verschlüsselt sind, wobei das Audioausgabegerät konfiguriert ist zum Entschlüsseln der bestimmten zweiten Teildatei basierend auf der ausgelesenen eindeutigen Kennung (490) des Chips und/oder der empfangenen ersten Teildatei;
iv) die Wiedergabe automatisch beendet wird, wenn der NFC-Tag (230) aus der unmittelbaren Umgebung des NFC-Lesegeräts (410) entfernt wird.

## Claims

1. Headphones (110) with
- a memory (420) on which one or more audio files (430, 450 are stored; wherein each of the one or more audio files (430; 450) is associated with a distinctive identification (440; 460), and wherein the one or more audio files (430; 450) are locked, such that access is only possible by an RFID code containing a distinctive identification corresponding to the distinctive identification (440; 460) of a respective audio file 430; 450); and
- an NFC reader (410) configured to read a distinctive identification (490) of an NFC tag (230) brought into the immediate vicinity of the NFC reader (410) of the headphones (110), where the headphones (110) thereby causing the headphones to:
compare the distinctive identification of the NFC tag (490) with distinctive identifications (440; 460) of audio files (430; 450) stored on the memory;
unlock a corresponding audio file (430; 450) in the event that the distinctive identification of the NFC tag (490) matches a distinctive identification (440; 460) of a stored audio file (430; 450); and
automatically start playback of the corresponding audio file (430; 450).

2. Headphones according to claim 17, **characterized in that** at least one of:
i) the playback automatically stops when the NFC tag (230) is removed the immediate vicinity of the NFC reader (410);
ii) the headphones are configured to record the file played, the distinctive identification of the NFC tag (490), and a time stamp so that, after ending an ongoing playback, the playback of the audio file (430; 450) is continued seamlessly when the NFC tag (230) is again brought into the immediate vicinity of the NFC reader (410); and
iii) the one or more audio files (430; 450) are incomplete audio files, where an incomplete audio file of the one or more audio files (430; 450) is completed only by data that is read out via the NFC reader (410) and audio content is played only after the completion of the incomplete audio file.

3. Headphones according to one of claims 1 and 2, wherein the headphones further comprise a magnet (470), in particular a magnetic surface (140), in the immediate vicinity of the NFC reader (410) so that a further device that has a further magnetic or magnetizable component (240) in addition to the NFC tag (230) for unlocking and playing audio content can be magnetically attached to the headphones (110).

4. Headphones according to claim 3, **characterized in that** the headphones comprise at least the magnetic surface in the immediate vicinity of the NFC reader (140) and the magnetic surface (140) forms a base surface of a first cavity (130).

5. Headphones according to claim 4, **characterized in that** a second cavity (310) is defined on a part of the base surface of the first cavity such that the magnetically attached further device can be tilted and thereby removed from the headphones (110).

6. Headphones according to claim 5, **characterized in that** the surface of the second cavity is not magnetic so that the device attached to the magnetic base surface can be pulled back to the magnetic base surface of the first cavity by magnetic attraction if it accidentally tilts into the second cavity (310).

7. Interactive headphone system (100) for storing and playing audio content, comprising:
an NFC tag (230) with an RFID code (480) having a distinctive identification (490) of the NFC tag; and
a headphone (110) according to claim 1.

8. System according to claim 7, **characterized in that** at least one of:
i) the playback automatically stops (550) when the NFC tag (230) is removed from the immediate vicinity of the NFC reader (410);
ii) the NFC tag (230) is embedded in a chip, in particular made of plastic (120);
iii) the file played, the distinctive identification of the NFC tag (490), and a time stamp are recorded so that after the end of an ongoing playback, the playback of the audio file (430; 450) is continued seamlessly when the NFC tag (230) is again brought into the immediate vicinity of the NFC reader (410); and
the headphones (110) furthermore comprise an infrared sensor (160) configured to detect whether the headphones (110) are worn by a person and the automatic playback of the audio file (430; 450) takes place only if the infrared sensor (160) detects that the headphones (110) are being worn by a person.

9. System according to claim 8, **characterized in that** the headphones furthermore comprise a magnet (470), in particular a magnetic surface (140), in the immediate vicinity of the NFC reader (410) and a magnetized or magnetizable component (240) is embedded in the chip such that the chip can be magnetically attached to the headphones (110) for unlocking and playing audio content.

10. System according to claim 9, **characterized in that** at least one of:
i) the chip, the NFC tag (230) and the magnetized or magnetizable component (240) have a substantially radial symmetry and have an identical axis of symmetry, where the NFC tag (230) and the magnetized or magnetizable component (240) in particular have a substantially ring-shaped geometry; and
the magnetic surface (140) of the headphones (110) forms a base surface of a first cavity (130), where the first cavity (130) has a geometry which is suitable to affix the chip in the lateral direction.

11. System according to claim 10, **characterized in that** a second cavity (310) is defined on a part of the base surface of the first cavity such that the magnetically attached chip is tilted into the second cavity (310) by applying pressure to the chip surface overlapping the second cavity (310) and can thereby be removed from the headphones (110).

12. System according to claim 11, **characterized in that** the surface of the second cavity is not magnetic so that the chip attached to the magnetic base surface can be pulled back to the magnetic base surface of the first cavity by magnetic pull if it accidentally tilts into the second cavity (310).

13. System according to one of the claims 9 to 12, **characterized in that** the magnet (470) and the magnetized or magnetizable component (240) are configured such that a noise at the user's ear from attaching the chip by the magnetic pull at the magnetic surface (140) is below a threshold value, wherein preferably the threshold value comprises a sound pressure level of between 85 dB and 100 dB.

14. System according to one of the claims 7 to 13, **characterized in that**, when the NFC tag (230) with the distinctive identification (490) is brought into the immediate vicinity of the NFC reader (410), the headphones (110) are configured to:
receive a complementary audio file from a chip embedding the NFC tag (230); supplement the audio file (430; 450) stored on the memory with the complementary audio file for the playback (540) of the audio file (430; 450).

15. System according to claim 14, **characterized in that** at least one of
i) the audio file (430; 450) stored on the memory is incomplete and is completed by the complementary audio file, where the headphones can only play complete audio files; and
ii) the complementary audio file received is encrypted and the headphones (110) are configured to decrypt the encrypted complementary audio file received, wherein preferably the audio files (430; 450) stored on the memory are encrypted, and the headphones (110) are configured to decrypt the audio files (430; 450) stored on the memory using the encrypted complementary audio files received.

16. Interactive audio output system (100) for playing audio content, comprising:
a chip (120) comprising an NFC tag (230), where the NFC tag (230) is associated with a distinctive identification (490), where furthermore a first partial file is stored on the chip (120); and
an audio output device comprising:
a memory (420) configured to store one or more second partial files (430; 450), where each of the one or more second partial files (430; 450) is associated with a distinctive identification (440; 460); and
an NFC reader (410),
where, when the NFC tag (230) is brought into immediate vicinity with the NFC reader (410), the audio output device is configured to:
read out the distinctive identification (490) of the chip (120);
receive the first partial file from the chip (120);
determine a second partial file of the one or more second partial files (430; 450) based on the distinctive identification (490) read out; and
automatically play audio content resulting from a combination of the first partial file from the chip (120) and the determined second partial file of the one or more second partial files (430; 450),
wherein the audio output device are headphones (110), particularly cup headphones.

17. Interactive audio output system (100) according to claim 16, **characterized in that** at least one of
i) audio content associated with the second partial file is locked and can only be played by combining the first partial file and the second partial file;
ii) the first partial file is stored in encrypted form on the chip and/or the first partial file is transmitted in encrypted form to the NFC reader (410), where the audio output device is configured to decrypt the first partial file based on the distinctive identification (490) of the chip read out and/or the second partial file determined;
iii) the one or more second partial files (430; 450) stored on the memory are encrypted, where the audio output device is configured to decrypt the determined second partial file based on the distinctive identification (490) of the chip read out and/or the first partial file received; and
iv) the playback stops automatically when the NFC tag (230) is removed from the immediate vicinity of the NFC reader (410).

## Revendications

1. Casque audio (110) comprenant
- une mémoire (420) sur laquelle un ou plusieurs fichiers audio (430 ; 450) sont stockés, dans laquelle chacun desdits un ou plusieurs fichiers audio (430 ; 450) est associé à un identifiant unique (440 ; 460), et dans laquelle lesdits un ou plusieurs fichiers audio (430 ; 450) sont verrouillés de sorte que seul l'accès par un code RFID contenant un identifiant unique correspondant à l'identifiant unique (440 ; 460) d'un fichier audio respectif (430 ; 450) est possible ; et
- un lecteur NFC (410) configuré pour lire un identifiant unique (490) d'une étiquette NFC (230) placée dans le voisinage immédiat du lecteur NFC (410) du casque audio (110), initiant ainsi le fonctionnement du casque audio (110) consistant à :
comparer l'identifiant unique de l'étiquette NFC (490) avec des identifiants uniques (440 ; 460) de fichiers audio (430 ; 450) stockés dans la mémoire ;
déverrouiller un fichier audio correspondant (430 ; 450) dans le cas où l'identifiant unique de l'étiquette NFC (490) correspond à un identifiant unique (440 ; 460) d'un fichier audio stocké (430 ; 450) ; et
à lancer automatiquement la lecture du fichier audio correspondant (430 ; 450).

2. Casque audio selon la revendication 1, caractérisé en au moins l'un des éléments suivants :
i) la lecture s'arrête automatiquement lorsque l'étiquette NFC (230) est retirée de l'environnement immédiat du lecteur NFC (410) ;
ii) le casque audio est configuré pour enregistrer le fichier lu, l'identifiant unique de l'étiquette NFC (490), et un horodatage, de sorte qu'après la fin d'une lecture en cours, la lecture du fichier audio (430 ; 450) se poursuit de manière transparente lorsque l'étiquette NFC (230) est à nouveau placée dans l'environnement immédiat du lecteur NFC (410) ; et
iii) les un ou plusieurs fichiers audio (430 ; 450) sont des fichiers audio incomplets, dans lequel un fichier audio incomplet des un ou plusieurs fichiers audio (430 ; 450) n'est complété que par des données lues via le lecteur NFC (410) et le contenu audio n'est reproduit qu'après que le fichier audio incomplet a été complété.

3. Casque audio selon l'une des revendications 1 et 2, dans lequel le casque audio comprend en outre un aimant (470), en particulier une surface magnétique (140), à proximité immédiate du lecteur NFC (140), de sorte qu'un autre dispositif, qui comprend en outre un composant magnétique ou magnétisable (240) en plus de l'étiquette NFC (230), peut être fixé magnétiquement au casque audio (110) pour déverrouiller et reproduire un contenu audio.

4. Casque audio selon la revendication 3, **caractérisé en ce que** le casque audio comprend au moins la surface magnétique à proximité immédiate du lecteur NFC (140) et la surface magnétique (140) forme une surface de base d'une première cavité (130).

5. Casque audio selon la revendication 4, **caractérisé en ce qu'**une deuxième cavité (310) est définie sur une partie de la surface de base de la première cavité, de sorte que l'autre dispositif fixé magnétiquement peut être incliné et ainsi retiré du casque audio (110).

6. Casque audio selon la revendication 5, **caractérisé en ce que** la surface de la deuxième cavité n'est pas magnétique, de sorte que le dispositif fixé à la surface de base magnétique est à nouveau attiré vers la surface de base magnétique de la première cavité par une force d'attraction magnétique en cas de basculement involontaire dans la deuxième cavité (310).

7. Système interactif de casque audio (100) pour le stockage et la reproduction de contenu audio, comprenant :
une étiquette NFC (230) comprenant un code RFID (480) qui contient un identifiant unique (490) de l'étiquette NFC ; et
le casque audio (110) selon la revendication 1.

8. Système selon la revendication 7, caractérisé en au moins l'un des éléments suivants :
i) la lecture s'arrête automatiquement (550) lorsque l'étiquette NFC (230) est retirée de l'environnement immédiat du lecteur NFC (410) ;
ii) l'étiquette NFC (230) est intégrée dans une puce, notamment en matière plastique (120) ;
iii) le fichier lu, l'identifiant unique de l'étiquette NFC (490) et un horodatage sont enregistrés, de sorte qu'après la fin d'une lecture en cours, la lecture du fichier audio (430 ; 450) se poursuit sans interruption lorsque l'étiquette NFC (230) est à nouveau placée dans l'environnement immédiat du lecteur NFC (410) ; et
iv) le casque audio (110) comprend en outre un capteur infrarouge (160) configuré pour détecter si le casque audio (110) est porté par une personne et la lecture automatique du fichier audio (430 ; 450) ne se produit que si le capteur infrarouge (160) détecte que le casque audio (110) est porté par une personne.

9. Système selon la revendication 8, **caractérisé en ce que** le casque audio comprend en outre un aimant (470), en particulier une surface magnétique (140), à proximité immédiate du lecteur NFC (410), l'étiquette NFC (230) est incorporée dans une puce et un composant magnétisé ou magnétisable (240) est incorporé dans la puce, de sorte que la puce peut être fixée magnétiquement au casque audio (110) pour déverrouiller et reproduire un contenu audio.

10. Système selon la revendication 9, caractérisé en au moins l'un des éléments suivants :
i) la puce, l'étiquette NFC (230) et le composant magnétisé ou magnétisable (240) présentent essentiellement une symétrie radiale et ont un axe de symétrie identique, l'étiquette NFC (230) et le composant magnétisé ou magnétisable (240) ayant notamment une géométrie essentiellement annulaire ; et
ii) la surface magnétique (140) du casque audio (110) forme une surface de base d'une première cavité (130), la première cavité (130) ayant une géométrie adaptée pour fixer la puce dans la direction latérale.

11. Système selon la revendication 10, **caractérisé en ce qu'**une seconde cavité (310) est définie sur une partie de la base de la première cavité, de sorte que la puce fixée magnétiquement peut être basculée dans la seconde cavité (310) en exerçant une pression sur la surface de la puce qui chevauche la seconde cavité (310) et peut ainsi être retirée du casque audio (110).

12. Système selon la revendication 11, **caractérisé en ce que** la surface de la deuxième cavité n'est pas magnétique, de sorte que la puce fixée à la surface de base magnétique est à nouveau attirée vers la surface de base magnétique de la première cavité par une force d'attraction magnétique en cas de basculement involontaire dans la deuxième cavité (310).

13. Système selon l'une quelconque des revendications 9 à 12, **caractérisé en ce que** l'aimant (470), et le composant magnétisé ou magnétisable (240) sont configurés de telle sorte qu'un bruit à l'oreille de l'utilisateur résultant de la fixation de la puce par la force d'attraction magnétique sur la surface magnétique (140) est inférieur à une valeur seuil, de préférence la valeur seuil comprenant un niveau de pression acoustique compris entre 85 dB et 100 dB.

14. Système selon l'une quelconque des revendications 7 à 13, **caractérisé en ce que**, lorsque l'étiquette NFC (230) comportant l'identifiant unique (490) est placée dans l'environnement immédiat du lecteur NFC (410), le casque audio (110) est configuré pour :
recevoir un fichier audio complémentaire d'une puce intégrant le tag NFC (230) ;
compléter le fichier audio (430 ; 450) stocké dans la mémoire avec le fichier audio complémentaire pour la lecture (540) du fichier audio (430 ; 450).

15. Système selon la revendication 14, caractérisé en au moins l'un des éléments suivants :
i) le fichier audio (430 ; 450) stocké dans la mémoire est incomplet et est complété par le fichier audio complémentaire, le casque audio ne pouvant reproduire que des fichiers audio complets ; et
ii) le fichier audio complémentaire reçu est crypté et le casque audio (110) est configuré pour décrypter le fichier audio complémentaire crypté reçu, de préférence les fichiers audio (430 ; 450) stockés dans la mémoire sont cryptés, et le casque audio (110) est configuré pour décrypter les fichiers audio (430 ; 450) stockés dans la mémoire au moyen des fichiers audio complémentaires cryptés reçus.

16. Système de sortie audio interactif (100) pour la reproduction de contenu audio, comprenant :
une puce (120) comprenant une étiquette NFC (230), dans laquelle l'étiquette NFC (230) est associée à un identifiant unique (490), dans laquelle en outre un premier fichier partiel est stocké sur la puce (120) ; et
un dispositif de sortie audio, comprenant
une mémoire (420) configurée pour stocker un ou plusieurs seconds fichiers partiels (430 ; 450), chacun desdits un ou plusieurs seconds fichiers partiels (430 ; 450) étant associé à un identifiant unique (440 ; 460) ; et
un lecteur NFC (410),
dans lequel, lorsque l'étiquette NFC (230) est placée dans l'environnement immédiat du lecteur NFC (410), le dispositif de sortie audio est configuré pour :
lire l'identifiant unique (490) de la puce (120) ;
recevoir le premier fichier partiel de la puce (120) ;
déterminer un deuxième fichier partiel des un ou plusieurs deuxièmes fichiers partiels (430 ; 450) à partir de l'identifiant unique (490) lu ; et
transmettre automatiquement des contenus audio résultant d'une combinaison du premier fichier partiel provenant de la puce (120) et du second fichier partiel déterminé parmi un ou plusieurs seconds fichiers partiels (430 ; 450),
dans lequel le dispositif de sortie audio est un casque audio (110), en particulier un casque à coques.

17. Système de sortie audio interactif (100) selon la revendication 16, caractérisé en au moins l'un des éléments suivants :
i) le contenu audio associé au deuxième sous-fichier est verrouillé et ne peut être lu qu'en combinant le premier sous-fichier et le deuxième sous-fichier ;
ii) le premier fichier partiel est stocké de manière cryptée sur la puce et/ou le premier fichier partiel est transmis de manière cryptée au lecteur NFC (410), le dispositif de sortie audio étant configuré pour décrypter le premier fichier partiel sur la base de l'identifiant unique lu (490) de la puce et/ou du second fichier partiel déterminé ;
iii) les un ou plusieurs seconds fichiers partiels (430 ; 450) stockés dans la mémoire sont cryptés, dans lequel le dispositif de sortie audio est configuré pour décrypter le second fichier partiel particulier sur la base de l'identifiant unique (490) de la puce lu et/ou du premier fichier partiel reçu ;
iv) la lecture s'arrête automatiquement lorsque l'étiquette NFC (230) est retirée de l'environnement immédiat du lecteur NFC (410).
